# EUROPEAN PATENT APPLICATION

(11) **EP 3 054 415 A1**
(43) Date of publication of application: **10.08.2016**
(21) Application number: 16154475.4
(22) Date of filing: 05.02.2016
(51) Int. Cl.: G06T 3/20, G06T 19/00, H04N 13/04, G06F 3/01

(54) **METHOD AND ELECTRONIC DEVICE FOR DISPLAYING SCREEN**

(30) Priority: 05.02.2015 KR 20150018047
(71) Applicant: Samsung Electronics Co., Ltd., Gyeonggi-do 16677 (KR)
(72) Inventor: Han, Ji-Yeon, 16677 Suwon-si (KR); Kim, Hyun-Jun, 16677 Suwon-si (KR); Nam, Byung-Hoon, 16677 Suwon-si (KR); Lee, Young-Pil, 16677 Suwon-si (KR); Jo, Jae-Hong, 16677 Suwon-si (KR)
(74) Representative: Nederlandsch Octrooibureau

(57) **Abstract**

A method and apparatus are provided for displaying a screen by an electronic device. The method includes displaying a first screen including a first object; detecting a screen switching event to switch from the displayed first screen to a second screen; and when the second screen does not include the first object, displaying at least a part of the first object on the second screen.

## Description

### BACKGROUND

### 1. Field of the Disclosure

The present disclosure relates generally to a method and an electronic device for displaying a screen, and more particularly, to a method and an electronic device for displaying a screen including an object.

### 2. Description of the Related Art

Technologies that provide virtual reality services using electronic devices, such as display devices, are actively being developed. A display device may split one screen into left and right sides, and display images corresponding to left and right eyes on the split screens, respectively. A Head Mounted Theater (HMT) device, which can be combined with a display device that provides images displayed on the split screens in order to combine the split images into a user's whole view, is an example of a device that is being developed. Accordingly, a virtual reality service may be provided to a user through the user's whole view.

A display device may change a screen in response to a wearer's motion and provide the changed screen. For example, when the display device detects a right rotation, the display device may provide a screen, which is configured relatively in the right side of the currently displayed screen. However, an electronic device may not display an object, which has been conventionally displayed, by providing another screen. Further, a user should perform an operation for switching the screen to search for a particular object.

### SUMMARY

The present disclosure is made to address at least the problems and/or disadvantages described above and to provide at least the advantages described below.

Accordingly, an aspect of the present disclosure is to provide a method and an apparatus for displaying a screen to solve the above-described problems and/or other problems.

Another aspect of the present disclosure is to provide a method and an electronic device for displaying a screen, which can track a particular object, such that a user can simply select the particular object without performing a plurality of screen switching operations.

In accordance with an aspect of the present disclosure, a method is provided for displaying a screen by an electronic device. The method includes displaying a first screen including a first object; detecting a screen switching event to switch from the displayed first screen to a second screen; and when the second screen does not include the first object, displaying at least a part of the first object on the second screen.

In accordance with another aspect of the present disclosure, an electronic device is provided. The electronic device includes a display that displays a first screen including a first object; and a processor that detects a screen switching event to switch the display from displaying the first screen to a second screen, and when the second screen does not include the first object, controls the display to display at least a part of the first object on the second screen.

In accordance with another aspect of the present disclosure, a method is provided for displaying a screen by an electronic device. The method includes displaying a first screen including a first object; detecting a screen switching event for switching from the first screen to a second screen; and when the second screen does not include the first object, displaying a location of the first object.

In accordance with another aspect of the present disclosure, an electronic device is provided. The electronic device includes a display that displays a first screen including a first object; and a processor that detects a screen switching event for switching from the first screen to a second screen, and when the second screen does not include the first object, controls the display to display a location of the first object.

### BRIEF DESCRIPTION OF THE DRAWINGS

The above and other aspects, features, and advantages of certain embodiments of the present disclosure will be more apparent from the following detailed description taken in conjunction with the accompanying drawings, in which:
FIG. 1 illustrates a network environment including an electronic device according to an embodiment of the present disclosure;
FIG. 2 illustrates a program module according to an embodiment of the present disclosure;
FIG. 3A is a perspective view illustrating an electronic device and a viewing device according to an embodiment of the present disclosure;
FIG. 3B illustrates a display method of an electronic device according to an embodiment of the present disclosure;
FIG. 3C is a conceptual diagram of a screen viewed by a user according to an embodiment of the present disclosure;
FIG. 4A is a perspective view illustrating a user wearing an HMT device according to an embodiment of the present disclosure;
FIGs. 4B to 4E are conceptual diagrams illustrating screen switching operations of an electronic device according to an embodiment of the present disclosure;
FIG. 5A is a conceptual diagram illustrating an entire screen for a virtual reality service according to an embodiment of the present disclosure;
FIG. 5B illustrates an electronic device according to an embodiment of the present disclosure;
FIG. 5C is a conceptual diagram illustrating a screen viewed by a user according to an embodiment of the present disclosure;
FIG. 5D is a conceptual diagram illustrating an entire screen for a virtual reality service according to an embodiment of the present disclosure;
FIG. 5E illustrates an electronic device according to an embodiment of the present disclosure;
FIG. 5F is a conceptual diagram illustrating a screen viewed by a user according to an embodiment of the present disclosure;
FIG. 5G is a conceptual diagram illustrating an entire screen according to an embodiment of the present disclosure;
FIG. 6 is a flowchart illustrating a method of displaying a screen according to an embodiment of the present disclosure;
FIGs. 7A and 7B are conceptual diagrams illustrating a screen according to an embodiment of the present disclosure;
FIGs. 8A and 8B are conceptual diagrams illustrating movement of a location of an object on an entire screen according to an embodiment of the present disclosure;
FIG. 9 is a flowchart illustrating a process of changing a location of an object to be tracked according to an embodiment of the present disclosure;
FIG. 10 is a conceptual diagram illustrating a change in a partial screen of an entire screen according to an embodiment of the present disclosure;
FIGs. 11A and 11B are conceptual diagrams illustrating movement of an object to be tracked on an entire screen according to an embodiment of the present disclosure;
FIG. 12A is a flowchart illustrating a method of displaying a screen according to an embodiment of the present disclosure;
FIG. 12B is a flowchart illustrating a method of displaying a screen according to an embodiment of the present disclosure;
FIG. 13 is a flowchart illustrating a method of displaying a screen according to an embodiment of the present disclosure;
FIGs. 14A and 14B are conceptual diagrams illustrating an entire screen and a display screen according to an embodiment of the present disclosure;
FIGs. 15A to 15C illustrate an entire screen and a display screen corresponding to a backward screen switching event according to an embodiment of the present disclosure;
FIG. 16 is a conceptual diagram illustrating a screen according to an embodiment of the present disclosure;
FIGs. 17A and 17B are conceptual diagrams illustrating a method of displaying of an object to be tracked according to movement of a user's view in a z axis direction according to an embodiment of the present disclosure;
FIG. 18 is a flowchart illustrating a method of displaying a screen according to an embodiment of the present disclosure;
FIGs. 19 and 20 are conceptual diagrams illustrating a method of displaying a location of an object to be tracked according to an embodiment of the present disclosure;
FIGs. 21A and 21B are conceptual diagrams illustrating an electronic device according to an embodiment of the present disclosure;
FIGs. 22A and 22B are conceptual diagrams illustrating a method of displaying a screen by an electronic device according to an embodiments of the present disclosure; and
FIG. 23 is a block diagram of an electronic device according to an embodiment of the present disclosure.

### DETAILED DESCRIPTION

Hereinafter, various embodiments of the present disclosure will be described with reference to the accompanying drawings. However, it should be understood that there is no intent to limit the present disclosure to the particular forms disclosed herein; rather, the present disclosure should be construed to cover various modifications, equivalents, and/or alternatives of embodiments of the present disclosure. In describing the drawings, similar reference numerals may be used to designate similar constituent elements.

Herein, terms are used merely for the purpose of describing particular embodiments and are not intended to limit the scope of other embodiments. For example, as used herein, singular forms may include plural forms as well unless the context clearly indicates otherwise. Unless defined otherwise, all terms used herein, including technical and scientific terms, have the same meaning as those commonly understood by a person skilled in the art to which the present disclosure pertains. Terms that are defined in a general dictionary are to be interpreted to have the same meanings as the contextual meanings in the relevant field of the art, and are not to be interpreted to have ideal or excessively formal meanings unless clearly defined as such herein.

As used herein, the expression "have", "may have", "include", or "may include" refers to the existence of a corresponding feature (e.g., a numeral, a function, an operation, or a constituent element such as a component), and does not exclude one or more additional features.

As used herein, the expression "A or B", "at least one of A and/or B", or "one or more of A and/or B" may include any or all possible combinations of items enumerated together. For example, the expression "A or B", "at least one of A and B", or "at least one of A or B" may include (1) at least one A, (2) at least one B, or (3) both at least one A and at least one B.

The expression "a first", "a second", "the first", or "the second" used herein may modify various elements regardless of the order and/or importance thereof, but does not limit the corresponding elements. The expressions above are used merely for the purpose of distinguishing an element from the other elements. For example, a first user device and a second user device may indicate different user devices, regardless of an order or importance thereof. For example, a first element may be referred to as a second element, and similarly, a second element may be referred to as a first element without departing from the scope of the present disclosure.

When an element (e.g., a first element) is referred to as being (operatively or communicatively) "connected" or "coupled" to another element (e.g., a second element), it may be directly connected or directly coupled to the second element or another element (e.g., a third element) may be interposer therebetween. However, when the first element is referred to as being "directly connected" or "directly coupled" to the second element, there are no elements interposed therebetween.

Herein, the expression "configured to" may be interchangeable with, for example, "suitable for", "having the capacity to", "designed to", "adapted to", "made to", or "capable of" according to the situation. The term "configured to" may not necessarily imply "specifically designed to" in hardware.

Alternatively, in some situations, the expression "a device configured to" may mean that the device, together with other devices or components, "is able to".

For example, the phrase "a processor adapted (or configured) to perform A, B, and C" may mean a dedicated processor (e.g., an embedded processor) for performing only the corresponding operations or a generic-purpose processor (e.g., a central processing unit (CPU) or an application processor (AP)) that can perform the corresponding operations by executing one or more software programs stored in a memory device.

An electronic device according to various embodiments of the present disclosure may include a smartphone, a tablet personal computer (PC), a mobile phone, a video phone, an electronic book (e-book) reader, a desktop PC, a laptop PC, a netbook computer, a personal digital assistant (PDA), a portable multimedia player (PMP), an MP3 player, a mobile medical appliance, a camera, and a wearable device (e.g., a head-mounted-device (HMD) such as electronic glasses, electronic clothes, an electronic bracelet, an electronic necklace, an electronic appcessory, electronic tattoos, or a smart watch).

The electronic device may also be a smart home appliance, such as a television, a Digital Video Disk (DVD) player, an audio device, a refrigerator, an air conditioner, a vacuum cleaner, an oven, a microwave oven, a washing machine, an air cleaner, a set-top box, a home automation control panel, a security control panel, a TV box (e.g., Samsung HomeSync^{®}, Apple TV^{®}, or Google TV^{®}), a game console (e.g., Xbox^{®} and PlayStation^{®}), an electronic dictionary, an electronic key, a camcorder, and an electronic photo frame.

The electronic device may also include various medical devices, such as various portable medical measuring devices (e.g., a blood glucose monitoring device, a heart rate monitoring device, a blood pressure measuring device, a body temperature measuring device, etc.), a Magnetic Resonance Angiography (MRA) device, a Magnetic Resonance Imaging (MRI) device, a Computed Tomography (CT) machine, and an ultrasonic machine, a navigation device, a Global Positioning System (GPS) receiver, an Event Data Recorder (EDR), a Flight Data Recorder (FDR), a Vehicle Infotainment Device, an electronic device for a ship (e.g., a navigation device for a ship, and a gyro-compass), avionics, security devices, an automotive head unit, a robot for home or industry, an automatic teller machine (ATM) in a bank, point of sales (POS) device in a shop, or an internet of things (IoT) device (e.g., a light bulb, various sensors, an electric or gas meter, a sprinkler device, a fire alarm, a thermostat, a streetlamp, a toaster, a sporting goods, a hot water tank, a heater, a boiler, etc.).

The electronic device may also include furniture, a building/structure, an electronic board, an electronic signature receiving device, a projector, or various kinds of measuring instruments (e.g., a water meter, an electric meter, a gas meter, and a radio wave meter).

Further, the electronic device may be a flexible device.

The electronic device may also be a combination of one or more of the aforementioned various devices. However, the electronic device is also not limited to the aforementioned devices, and may include a new electronic device according to the development of technology.

As used herein, the term "user" may indicate a person who uses an electronic device or a device (e.g., an artificial intelligence electronic device) that uses an electronic device.

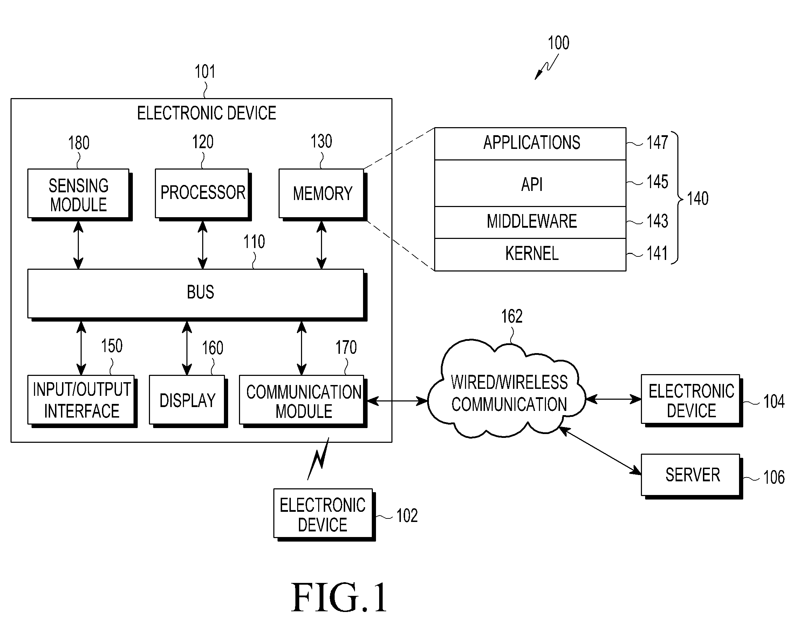

FIG. 1 illustrates a network environment including an electronic device according to an embodiment of the present disclosure.

Referring to FIG. 1, an electronic device 101 within a network environment 100 includes a bus 110, a processor 120, a memory 130, an input/output interface 150, a display 160, a communication module 170, and a sensing module 180. Alternatively, the electronic device 101 may omit at least one of the above elements and/or further include other elements.

The bus 110 may include a circuit for connecting the elements 120 to 180 and transmitting communication between the elements (for example, control messages and/or data).

The processor 120 may include one or more of a CPU, an AP, and a Communication Processor (CP). The processor 120 may control, for example, one or more other elements of the electronic device 101 and/or process an operation or data related to communication. The processor 120 may be referred to as a controller or may include a controller as a part thereof.

The memory 130 may include a volatile memory and/or a non-volatile memory. The memory 130 may store, for example, instructions or data related to at least one other element of the electronic device 101. The memory 130 stores software and/or a program 140.

In FIG. 1, the program 140 includes a kernel 141, middleware 143, an Application Programming Interface (API) 145, and an application program (or "application") 147. At least some of the kernel 141, the middle 143, and the API 145 may be referred to as an Operating System (OS).

The kernel 141 may control or manage system resources (for example, the bus 110, the processor 120, and the memory 130) that are used to execute an operation or a function implemented in the other programs (for example, the middleware 143, the API 145, and the application programs 147). Further, the kernel 141 may provide an interface through which the middleware 143, the API 145, or the application program 147 may access individual elements of the electronic device 101 to control or manage system resources.

The middleware 143 may serve as a relay for allowing the API 145 or the application programs 147 to communicate with the kernel 141 to exchange data. Further, in regard to task requests received from the application program 147, the middleware 143 may perform a control (for example, scheduling or load balancing) for the task requests using a method of assigning at least one application a priority for using the system resources (for example, the bus 110, the processor 120, or the memory 130) of the electronic device 101.

The API 145 is an interface by which the applications 147 control functions provided from the kernel 141 or the middleware 143, and may include at least one interface or function (for example, instructions) for file control, window control, image processing, or text control.

The input/output interface 150 may serve as an interface for transmitting commands or data input from the user or an external device to other element(s) of the electronic device 101. Further, the input/output interface 150 may output commands or data received from another element(s) of the electronic device 101 to the user or an external device.

The display 160 may include a Liquid Crystal Display (LCD), a Light Emitting Diode (LED) display, an Organic Light Emitting Diode (OLED) display, a Micro Electro Mechanical System (MEMS) display, or an electronic paper display. The display 160 may display various types of content (for example, text, images, videos, icons, or symbols) to users. The display 160 may include a touch screen for receiving a touch input, a gesture input, a proximity input, and/or a hovering input using an electronic pen or a user's body part.

The communication module 170 may configure communication between, for example, the electronic device 101 and an external device, such as an external electronic device 102, an external electronic device 104, or a server 106. For example, the communication module 170 may be connected to a network 162 through wireless or wired communication to communicate with the external electronic device 104 or the server 106.

The wireless communication may use, for example, at least one of Long-Term Evolution (LTE), LTE-Advanced (LTE-A), code division multiple access (CDMA), wideband CDMA (WCDMA), Universal Mobile Telecommunications System (UMTS), wireless broadband (WiBro), and Global System for Mobile Communications (GSM), for example, as a cellular communication protocol. For example, the wired communication may include at least one of a Universal Serial Bus (USB), a High Definition Multimedia Interface (HDMI), Recommended Standard 232 (RS-232), and a Plain Old Telephone Service (POTS).

The network 162 may include at least one of communication networks such as a computer network (for example, a local area network (LAN) or a wide area network (WAN)), the Internet, and a telephone network.

Each of the external electronic devices 102 and 104 may be the same or different type of device as the electronic device 101.

The server 106 may include a group of one or more servers.

All or some of the operations performed by the electronic device 101 may be performed by another electronic device or a plurality of electronic devices 102 or 104, or the server 106.

When the electronic device 101 should perform some functions or services automatically or by request, the electronic device 101 may send a request for performing at least some of the functions related to the functions or services to another device 102 or 104, or the server 106 instead of performing the functions or services by itself. The another electronic device may carry out the requested function or the additional function and transfer the result, obtained by carrying out the function, to the electronic device 101. The electronic device 101 may provide the requested functions or services based on the received result as it is or after additionally processing the received result. To achieve this, for example, cloud computing, distributed computing, or client-server computing technology may be used.

The sensing module 180 may support driving of the electronic device 101 by performing at least one of the operations (or functions) implemented in the electronic device 101.

The sensing module 180 may measure a physical quantity or detect an operation state of the electronic device 101, and may convert the measured or detected information into an electrical signal. For example, the sensing module 180 may include at least one of a gesture sensor, a gyro sensor, an atmospheric pressure sensor, a magnetic sensor, an acceleration sensor, a grip sensor, a proximity sensor, a color sensor (for example, a Red, Green, and Blue (RGB) sensor), a bio sensor, a temperature/humidity sensor, an illumination sensor, and ultra violet (UV) sensor. Additionally or alternatively, the sensing module 180 may include an E-nose sensor, an electromyography (EMG) sensor, an electroencephalogram (EEG) sensor, an electrocardiogram (ECG) sensor, an infrared (IR) sensor, an iris sensor, and/or a fingerprint sensor.

The sensing module 180 may process at least some of the information obtained from other elements (for example, at least one of the processor 120, the memory 130, the input/output interface 150, and the communication module 170) and utilize the same in various manners. For example, the sensing module 180 may control at least some functions of the electronic device 101 by using the processor 120 or independently therefrom so that the electronic device 101 may interwork with other electronic devices 102 or 104, or the server 106). The sensing module 180 may be integrated into the processor 120 or the communication module 170. Alternatively, at least one element of the sensing module 180 may be included in the server 106, and at least one operation implemented in the sensing module 180 may be supported by the server 106.

The display 160 may display a first screen including a first object. The processor 120 may make a control to detect a screen switching event for switching the screen of the display from the first screen to a second screen and, when the second screen does not include the first object, to display at least a part of the first object on the second screen.

The sensing module 180 may detect movement of the electronic device 101. In this case, the screen switching event may be the movement of the electronic device.

The processor 120 may make a control to switch the first screen corresponding to a first part of a preset entire screen to the second screen corresponding to a second part of the preset entire screen, based on at least one of a degree and a direction of the movement and to display the switched second screen.

The processor 120 may make a control to display the second screen such that at least a part of the first object contacts the boundary of the second screen.

The processor 120 may make a control to display the second screen such that at least the part of the first object contacts the boundary of the second screen from a time point when the first object contacts the boundary of the second screen by the screen switching corresponding to the screen switching event.

The processor 120 may make a control to detect a backward screen switching event for the screen switching in a direction opposite to the direction of the screen switching corresponding to the screen switching event and to display the first object in response to the backward screen switching event.

The processor 120 may also make a control to display the first object at a preset location of the second screen and make a control to change and display a location of the first object on a preset entire screen according to the screen switching event.

The first screen may include a left eye image and a right eye image to provide a virtual reality service.

The display 160 may display the first screen including the first object. The processor 20 may make a control to detect the screen switching event for switching the screen of the display 120 from the first screen to the second screen and, when the second screen does not include the first object, to display the location of the first object.

The processor 120 may make a control to display at least one of an indicator, which indicates the location of the first object, and map information, which shows a relative location of the first object.

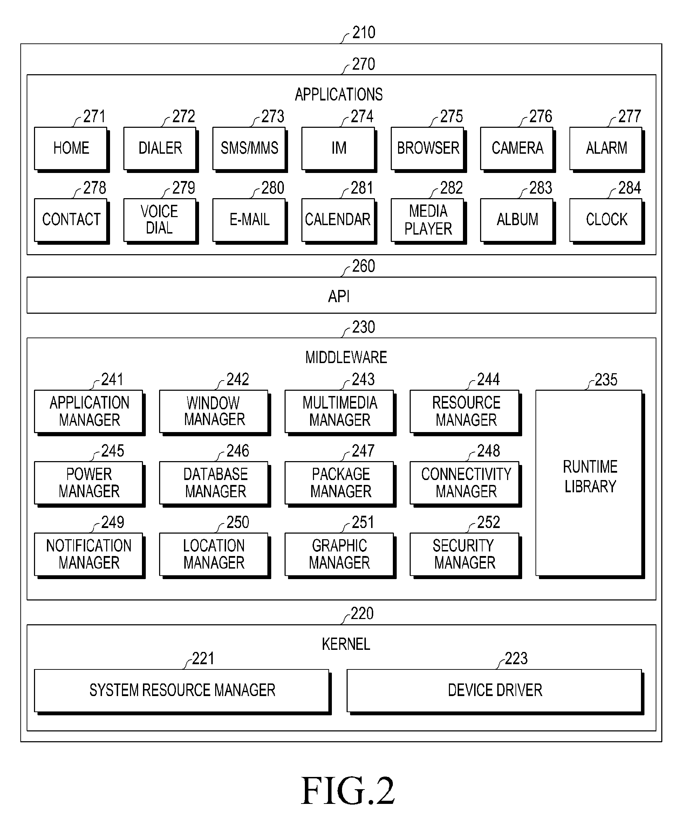

FIG. 2 illustrates a program module according to an embodiment of the present disclosure. For example, the program module illustrated in FIG. 2 may be used as the program 140 illustrated in FIG. 1.

Referring to FIG. 2, a program module 210 includes an OS for controlling resources related to an electronic device in which it is installed and/or various applications executed in the OS. For example, the OS may be Android^{®}, iOS^{®}, Windows^{®}, Symbian^{®}, Tizen^{®}, or Bada^{®}etc.

The programming module 210 includes a kernel 220, middleware 230, an API 260, and applications 270. At least some of the program module 210 may be preloaded in the electronic device or downloaded from a server.

The kernel 220 includes a system resource manager 221 and a device driver 223. The system resource manager 221 may control, allocate, or collect the system resources. The system resource manager 221 may include a process manager, a memory manager, and/or a file system manager. The device driver 223 may include a display driver, a camera driver, a Bluetooth driver, a shared-memory driver, a USB driver, a keypad driver, a Wi-Fi driver, an audio driver, or an Inter-Process Communication (IPC) driver.

The middleware 230 may provide a function required by the applications 270 in common or provide various functions to the applications 270 through the API 260, such that the applications 270 efficiently use limited system resources of the electronic device. The middleware 230 includes a runtime library 235, an application manager 241, a window manager 242, a multimedia manager 243, a resource manager 244, a power manager 245, a database manager 246, a package manager 247, a connectivity manager 248, a notification manager 249, a location manager 250, a graphic manager 251, and a security manager 252.

The run time library 235 may include a library module that a compiler uses in order to add new functions through a programming language while the application 270 is executed. The run time library 235 may perform input/output management, memory management, and/or a function for an arithmetic function.

The application manager 241 may manage a life cycle of at least one application among the applications 270.

The window manager 242 may manage a graphical user interface (GUI) resource used in a screen.

The multimedia manager 243 may detect a format required for reproducing various media files and encode or decode a media file using a codec appropriate for the corresponding format.

The resource manager 244 may manage resources such as a source code, a memory, or a storage space of at least one application among the applications 270.

The power manager 245 may operate together with a Basic Input/Output System (BIOS), in order to manage a battery or power and may provide power information for the operation of the electronic device.

The database manager 246 may generate, search for, and/or change a database to be used by at least one of the applications 270.

The package manager 247 may manage the installation or updating of applications distributed in the form of a package file.

The connectivity manager 248 may manage, for example, a wireless connection of Wi-Fi or Bluetooth.

The notification manager 249 may display or notify an event such as a received message, an appointment, a proximity notification, etc., to a user.

The location manager 250 may manage location information of the electronic device.

The graphic manager 251 may manage graphic effects to be provided to a user and user interfaces related to the graphic effects.

The security manager 252 may provide various security functions required for system security or user authentication.

When the electronic device has a call function, the middleware 230 may further include a telephony manager for managing a voice call function or a video call function of the electronic device.

The middleware 230 may include a middleware module for forming a combination of various functions of the aforementioned elements. The middleware 230 may provide a module specialized for each type of operating system in order to provide a differentiated function. In addition, a few existing elements may be dynamically removed from the middleware 230, or new elements may be added to the middleware 230.

The API 260, which is a set of API programming functions, may be provided in a different configuration for each OS. For example, using Android^{®} or iOS^{®}, an API set may be provided for each platform. When using Tizen^{®}, two or more API sets may be provided for each platform.

The applications 270 include a home application 271, a dialer application 272, a short message service/multimedia messaging service (SMS/MMS) application 273, an Instant Message (IM) application 274, a browser application 275, a camera application 276, an alarm application 277, a contact information application 278, a voice dial application 279, an e-mail application 280, a calendar application 281, a media player application 282, an album application 283, and a clock application 284. Alternatively, some these applications may be removed from the applications 270. Further, other applications may be included in the applications 270, such as a health care application (for example, an application for measuring an amount of exercise or blood sugar), and an environmental information application (for example, an application for providing atmospheric pressure, humidity, or temperature information).

The applications 270 may also include an information exchange application that supports information exchange between the electronic device and an external electronic device. The information exchange application may include, for example, a notification relay application for transmitting particular information to the external electronic device, or a device management application for managing the external electronic device.

For example, the notification relay application may include a function of transferring, to the external electronic device, notification information generated from other applications of the electronic device (for example, the SMS/MMS application 273, the e-mail application 280, a health management application, or an environmental information application).

Further, the notification relay application may receive notification information from an external electronic device and provide the received notification information to a user.

The device management application may manage (for example, install, delete, or update) a function for at least a part of the external electronic device communicating with the electronic device (for example, turning on/off the external electronic device itself (or some elements thereof) or adjusting brightness (or resolution) of a display), applications executed in the external electronic device, or services provided from the external electronic device (for example, a telephone call service or a message service).

The applications 270 may include an application (for example, a health management application) designated according to attributes of the external electronic device (for example, attributes of the electronic device such as the type of electronic device which corresponds to a mobile medical device).

The applications 270 may include an application received from the external electronic device. The applications 270 may also include a preloaded application or a third party application that can be downloaded from the server.

Names of the elements of the program module 210 may change depending on the type of OS.

At least some of the program module 210 may be implemented in software, firmware, hardware, or a combination of two or more thereof. At least some of the programming module 210 may be implemented (for example, executed) by a processor. At least some of the programming module 210 may include, for example, a module, program, routine, sets of instructions, process, etc., for performing one or more functions.

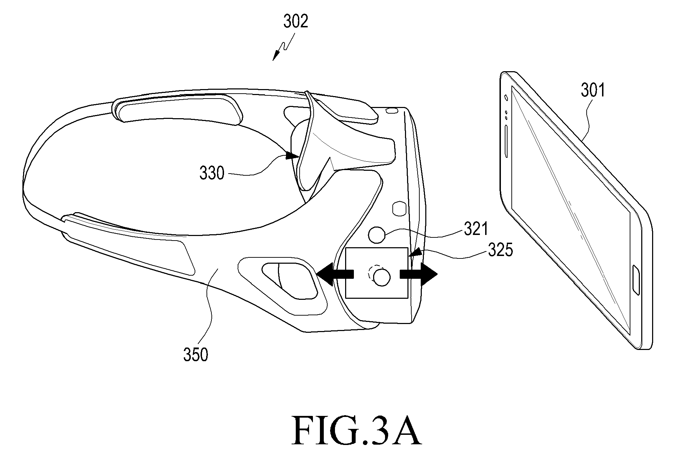

FIG. 3A is a perspective view illustrating an electronic device and a viewing device according to an embodiment of the present disclosure.

Referring to FIG. 3A, the electronic device 301 includes a display and stores a virtual reality application that can provide a display similar to an actual reality to the user. For example, the virtual reality application displays a left eye image and a right eye image corresponding to each of the user's eyes based on a stereo scheme.

The viewing device 302 may be an HMT device, which may be worn on a user's head even as the user moves. Further, the viewing device 102 receives the electronic device 301 such that the user may view an image displayed on the electronic device 301 through the viewing device 102.

The viewing device 302 includes a housing 350 that is worn on the user's head, a blackout part 330 that is fixed to the housing at an area corresponding to locations of the user's eyes, and at least one input button 321 provided on the housing 350. The viewing device 302 also includes an input pad 325 for receiving a swipe input from the user.

The user may make the blackout part 330 fit closely to each of the user's eyes and, accordingly, the user may view the images provided by the virtual reality application provided from the electronic device 301, without any interference from external light.

The electronic device 301 may be received by, e.g., coupled to, the viewing device 302. The electronic device 301 may be connected to the viewing device 302 through a wire or wirelessly. For example, although the electronic device 301 may be connected to the viewing device 302 based on a USB, it is only an example and there is no limitation on the connection if data transmission/reception between the two devices 301 and 302 is possible through the connection.

According to another embodiment, the electronic device 301 may be simply physically coupled to the viewing device 302.

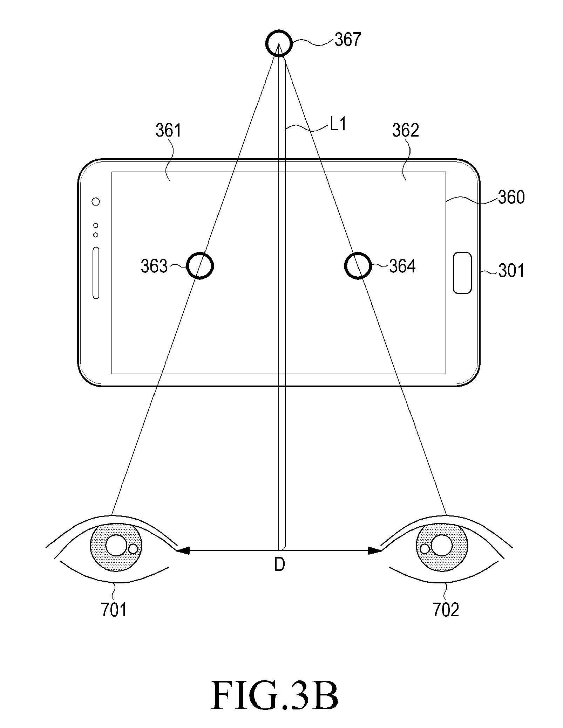

FIG. 3B illustrates a display method of an electronic device according to an embodiment of the present disclosure.

Referring to FIG. 3B, the electronic device 301 displays a left eye image 361 and a right eye image 362 on the display 360. The left eye image 361 includes a first object 363 and the right eye image 362 includes a second object 364. The first object 363 corresponds to a left eye 701 and the second object 364 corresponds to a right eye 702.

In FIG. 3B, an InterPupillary Distance (IPD) corresponding to a distance between the left eye 701 and the right eye 702 may be D.

The left eye image 361 and the right eye image 362 may correspond to both of the user's eyes to provide a feeling of depth to the user. For example, the left eye image 361 and the right eye image 362 may be images for the virtual reality service, and may be images configured to give a three-dimensional effect to a part of the entire screen for the virtual reality service.

The electronic device 301 displays the first object 363 and the second object 364 with a predetermined distance therebetween. The user views an object image 367, which exists at the intersection of a straight line passing through a left eye 701 and the first object 363 and a straight line passing through a right eye 702 and the second object 364. For example, the user views an object image which exists at a location spaced apart from the user by L1.

Accordingly, the electronic device 301 may display the first object 363 and the second object 364, which have a loop shape.

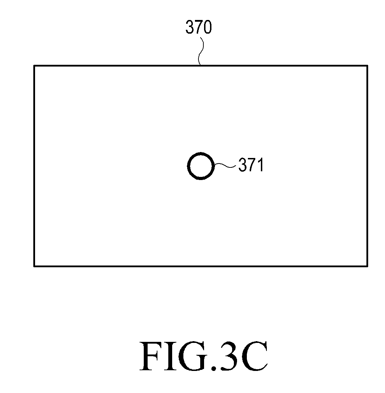

FIG. 3C is a conceptual diagram illustrating a screen viewed by a user according to an embodiment of the present disclosure.

Referring to FIG. 3C, the user views a screen 370 including a loop-shaped image 371.

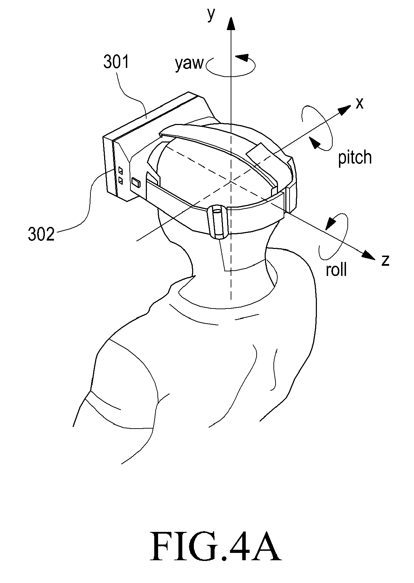

FIG. 4A is a perspective view illustrating a user wearing an HMT device according to an embodiment of the present disclosure.

Referring to FIG. 4A, the user wears the viewing device 302 coupled to the electronic device 301, and the user may view an image displayed on the display of the electronic device 301.

As described above, the electronic device 301 may display a left eye image and a right eye image on left and right parts of the display. The left eye image may be incident on the user's left eye and the right eye image may be incident on the user's right eye. For example, the left eye image and the right eye image may be incident on the user's whole view through both eyes. The user may receive a virtual reality service through the viewing device 302 by viewing the images incident on both eyes.

The virtual reality application executed by the electronic device 301 may display a binocular image on the display. The virtual reality application may change and display the binocular image according to a motion (yaw, pitch, and/or roll) of the user or the viewing device 302.

The viewing device 302 may receive a command by at least one of the input button 321 and the input pad 325 from the user. For example, the electronic device 301 may acquire a focus control command or a focus adjustment command from the viewing device 302. Further, the user may directly input the focus control command or the focus adjustment command into the electronic device 301.

For example, when the user inputs a swipe gesture in a first direction of the input pad 325, the electronic device 301 may perform a control command corresponding to the swipe gesture.

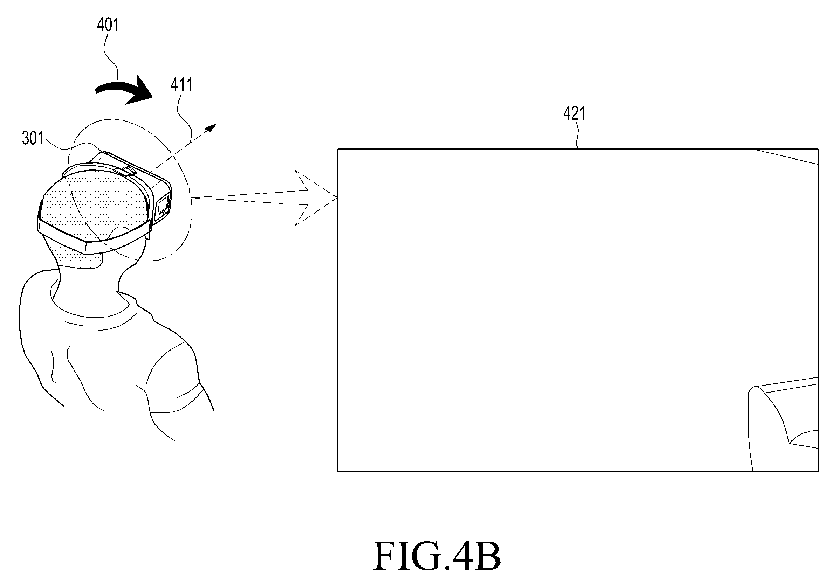

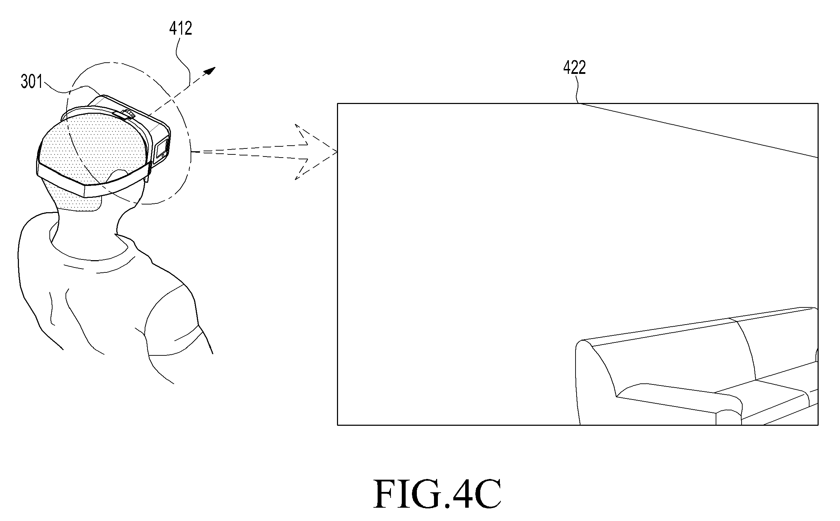

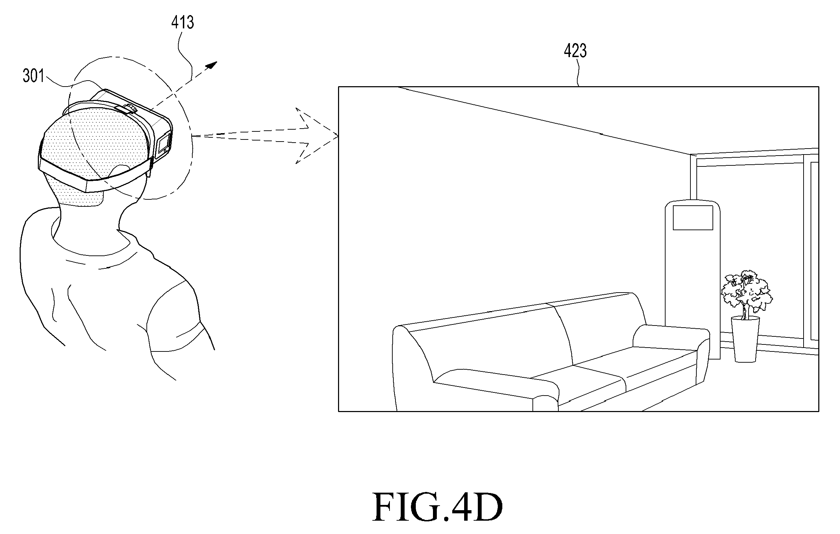

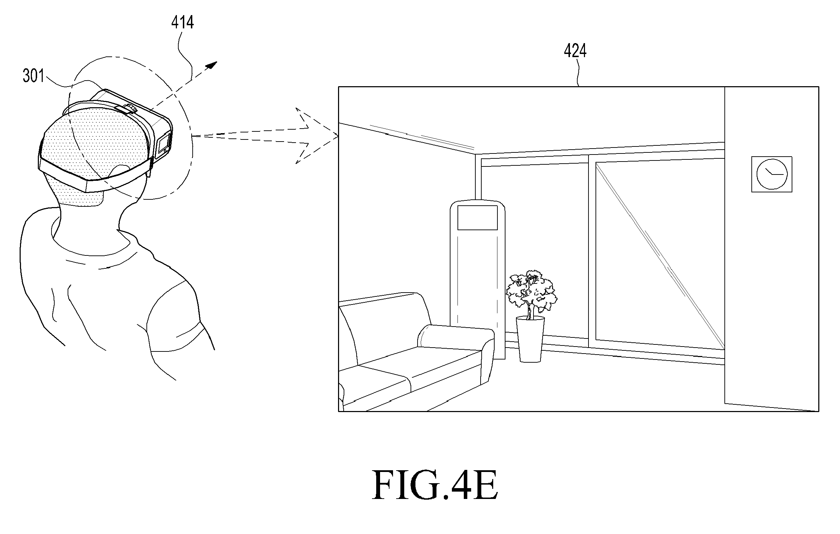

FIGs. 4B, 4C, 4D, and 4E are conceptual diagrams illustrating screen switching operations of an electronic device according to an embodiment of the present disclosure.

Referring to FIG. 4B, the user looks in a first direction 411 while wearing the electronic device 301. As described above, the electronic device 301 displays a left eye image and a right eye image that are combined for the user in a first virtual screen 421. The first virtual screen 421 may be a screen corresponding to a part of the entire screen configured in the virtual reality service.

When the user turns his head in a right direction 401, the electronic device 301 senses the rotation in the right direction 401. As illustrated in FIGs. 4C to 4E, as the user turns his head in a second direction 412, a third direction 413, and a fourth direction 414, from the first direction 411, the electronic device 301 senses the rotation 401 and changes the display accordingly. Specifically, the electronic device 301 displays a second virtual screen 422 in accordance with the second direction 412, a third virtual screen 423 in accordance with the third direction 413, and a fourth virtual screen 424 in accordance with the fourth direction 414. More specifically, the electronic device 301 displays different left and right eye images for displaying each of the virtual screens 422 to 424.

Each of the first virtual screen 421 to the fourth virtual screen 424 may be a partial screen of an entire screen for the virtual reality service.

As illustrated in FIGs. 4B to 4E, the second virtual screen 422 is a screen for a foreground arranged relatively to the right of the first virtual screen 421, the third virtual screen 423 is a screen for a foreground arranged relatively to the right of the second virtual screen 422, and the fourth virtual screen 424 is a screen for a foreground arranged relatively to the right side of the third virtual screen 423. Accordingly, as the user turns his head in the right direction 401, the user may sequentially view the foregrounds arranged relatively on the right side.

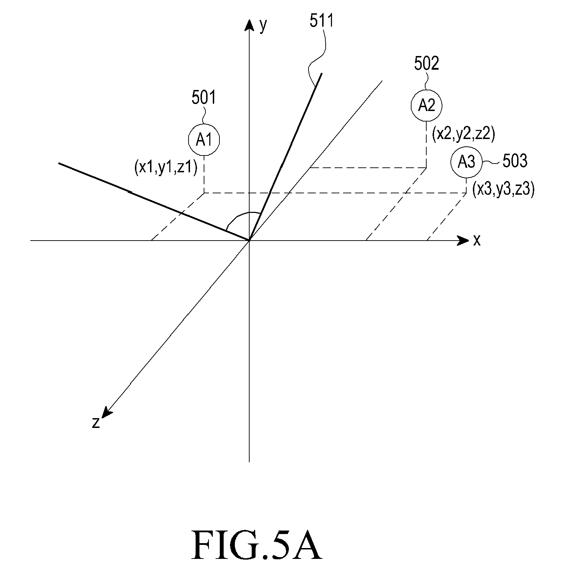

FIG. 5A is a conceptual diagram illustrating an entire screen for a virtual reality service according to an embodiment of the present disclosure.

Referring to FIG. 5A, the entire screen is configured in three dimensions and includes objects 501, 502, and 503. The first object 501 is arranged at a first location (x1, y1, z1), the second object 502 is arranged at a second location (x2, y2, z2), and the third object 503 is arranged at a third location (x3, y3, z3). The objects 501, 502, and 503 are images that constitute the entire screen, and there is no limitation on the type thereof.

A first user view 511 may be configured on the entire screen. In FIG. 5A, the first user view 511 includes the first object 501. Accordingly, an electronic device may display a first screen corresponding to the first user view 511.

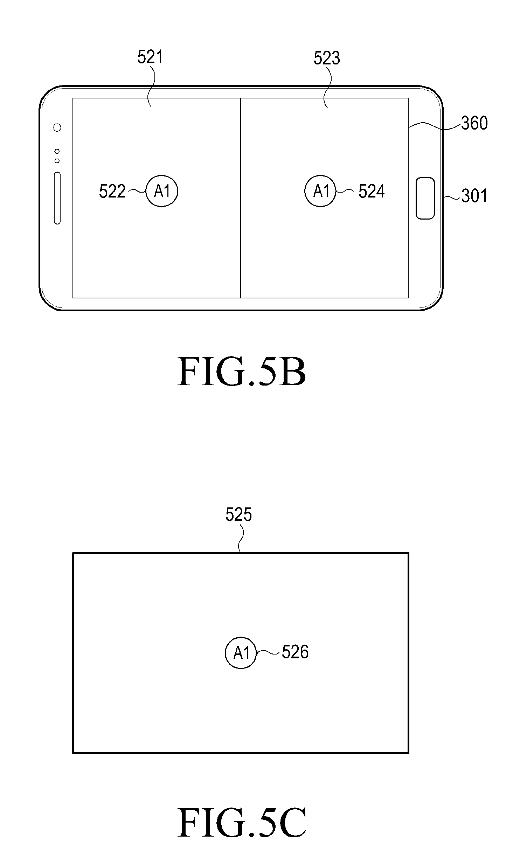

FIG. 5B illustrates an electronic device according to an embodiment of the present disclosure.

Referring to FIG. 5B, the electronic device 301 displays a left eye image 521 and a right eye image 523 on the display 360. The left eye image 521 includes a first object 522 and the right eye image 523 includes a second object 524.

FIG. 5C is a conceptual diagram illustrating a screen viewed by a user according to an embodiment of the present disclosure.

Referring to FIG. 5C, the user views a screen 525, which includes a first object 526. The first object 526 is a combination of the left eye image 521 including the first object 522 and the right eye image 523 including the second object 524. The first screen 525 may be generated by projecting the entire screen onto a plane corresponding to the first user view 511, as illustrated in FIG. 5A.

While displaying the left eye image 521 including the first object 522 and the right eye image 523 including the second object 524, the electronic device 301 may detect a screen switching event. The screen switching event may be movement, e.g., a rotation, of the electronic device 301. For example, the user may turn his head while wearing the electronic device 301 as illustrated in FIGs. 4B to 4E.

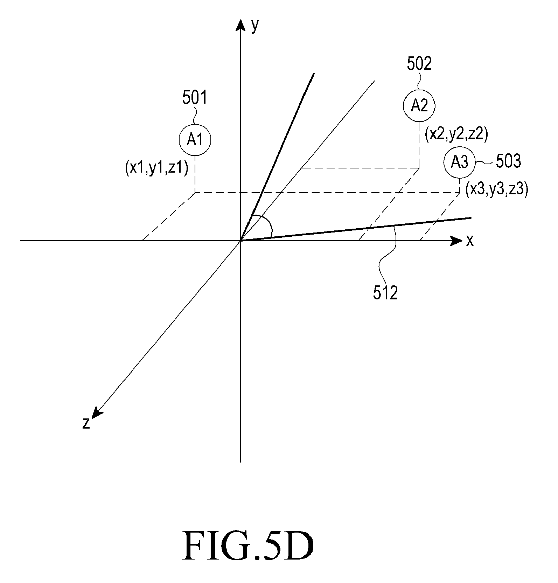

FIG. 5D is a conceptual diagram illustrating an entire screen for a virtual reality service according to an embodiment of the present disclosure.

Referring to FIG. 5D, the electronic device 301 changes the user's view into a second user view 512. The second user view 512 includes the second object 502 and the third object 503. The electronic device 101 changes the user's view from the first user view 511 to the second user view 512 in accordance with a detected rotation angle of the electronic device 301.

The screen switching event corresponding to the movement of the electronic device 301 is only an example, and there is no limitation on an input method, if the input method can be detected by the electronic device 301.

The detected rotation angle may include two angles of a spherical coordinate system, which are orthogonal to each other, e.g., a first angle (θ) on an xy plane with a z axis as an axis of rotation and a second angle (ϕ) formed with the xy plane. The electronic device 301 may rotate the first user view 511 at the rotation angle of the electronic device 301 to determine the second user view 512. Alternatively, the electronic device 301 may determine the screen rotation angle by using the rotation angle of the electronic device 301, and rotate the first user view 511 at the screen rotation angle to determine the second user view 512.

The electronic device 301 displays a second screen corresponding to the second user view 512.

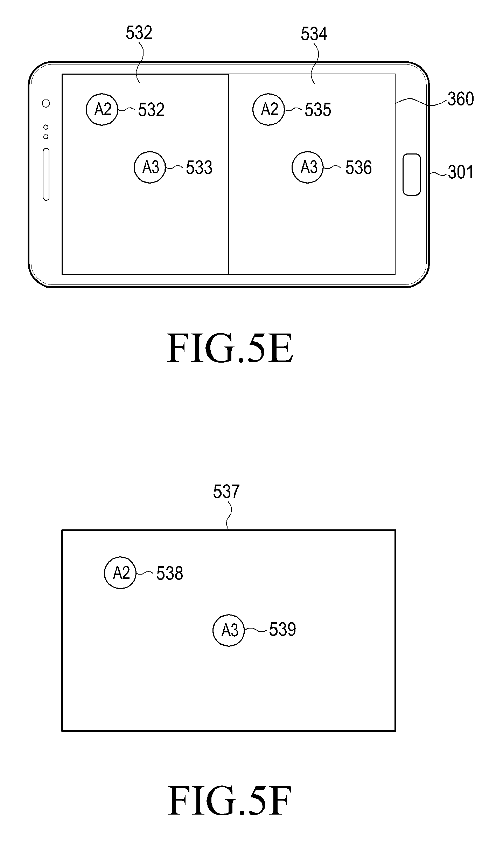

FIG. 5E illustrates an electronic device according to an embodiment of the present disclosure.

Referring to FIG. 5E, the electronic device 301 displays a left eye image 531 and a right eye image 534 corresponding to the second screen 512. The left eye image 531 includes a second object 532 for the left eye and a third object 533 for the left eye, and the right eye image 534 includes a second object 535 for the right eye and a third object 536 for the right eye.

FIG. 5F is a conceptual diagram illustrating a screen viewed by a user according to an embodiment of the present disclosure.

Referring to FIG. 5F, the user views a screen 537, which includes a second object 538 and a third object 539. The second object 538 and the third object 539 are combinations of the left eye image 531 including the second object 532 for the left eye and the third object 533 for the left eye, and the right eye image 534 including the second object 535 for the right eye and the third object 536 for the right eye, respectively.

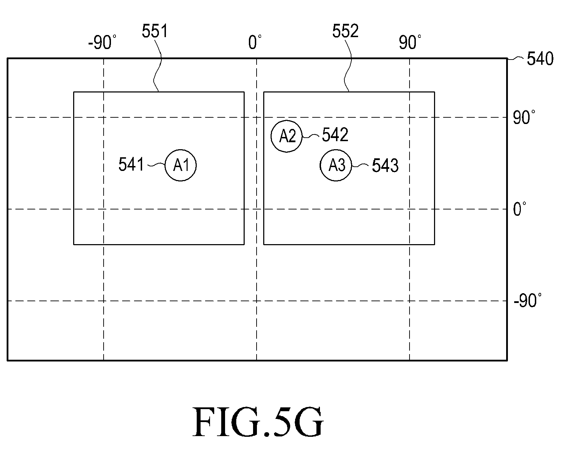

FIG. 5G is a conceptual diagram illustrating an entire screen according to an embodiment of the present disclosure.

Referring to FIG. 5G, the electronic device 301 configures an entire screen 540 in a rotation angle coordinate system. The entire screen 540 configured in the rotation angle coordinate system includes a horizontal axis as a first angle (θ) and a vertical axis as a second angle (ϕ). The electronic device 301 may initially display a first screen 551, which is a first part of the entire screen 540. The first screen 551 includes a first object 541. More specifically, the electronic device 301 displays a left eye image and a right eye image corresponding to the first screen 551.

The electronic device 301 detects a rotation and determines a second screen 552 in response to the detected rotation. The electronic device 301 adjusts the display screen from the first screen 551 to the second screen 552 in the entire screen 540, in response to the rotation of the electronic device 101. The second screen 552 includes a second object 542 and a third object 543. The electronic device 301 displays a left eye image and a right eye image corresponding to the second screen 552.

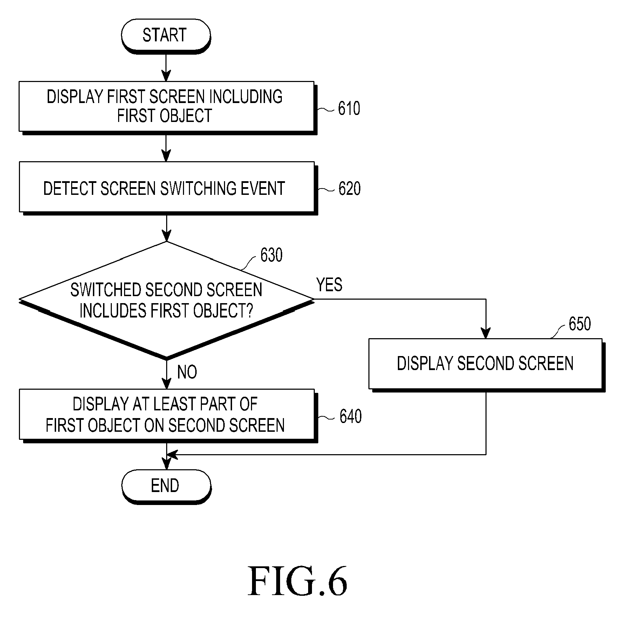

FIG. 6 is a flowchart illustrating a method of displaying a screen according to an embodiment of the present disclosure.

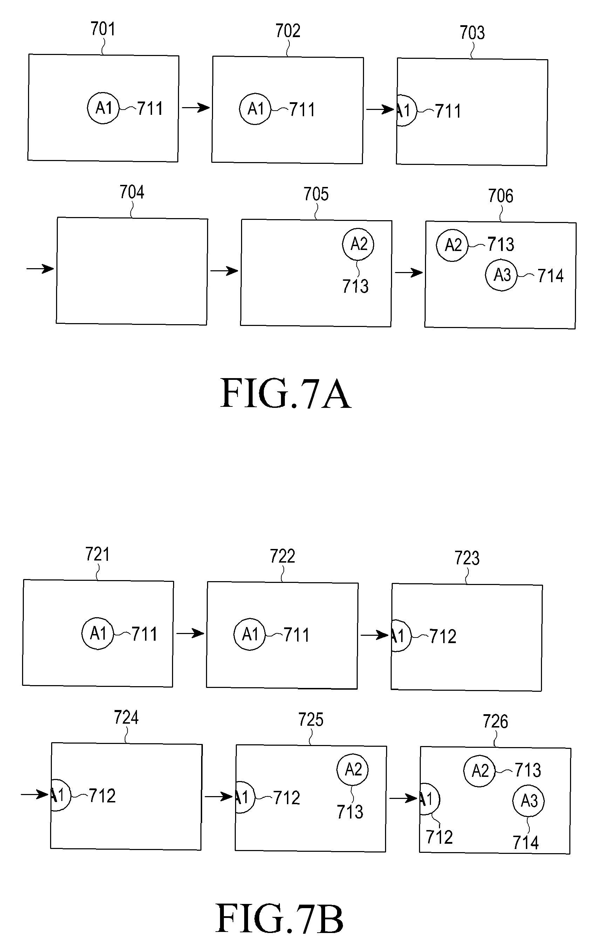

FIGs. 7A and 7B are conceptual diagrams illustrating a screen according to an embodiment of the present disclosure.

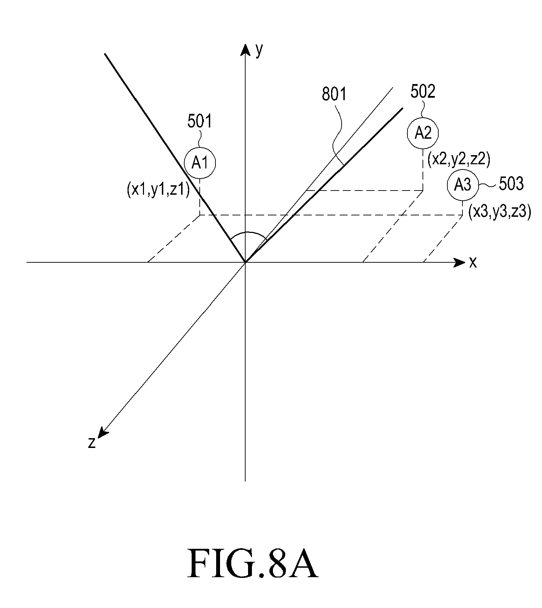

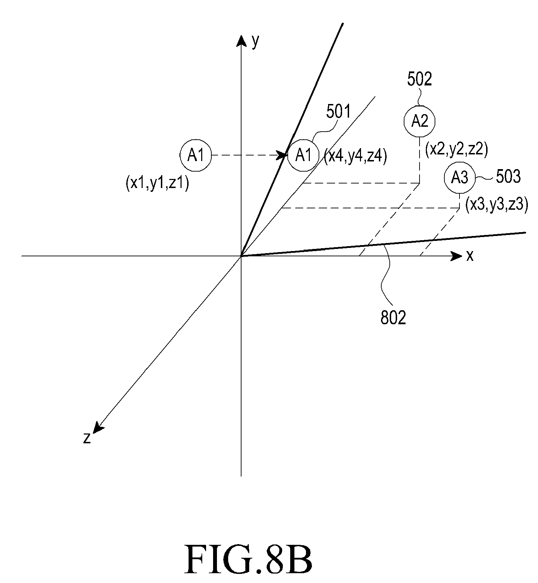

FIGs. 8A and 8B are conceptual diagrams illustrating movement of a location of an object on an entire screen according to an embodiment of the present disclosure.

Referring to FIG. 6, in step 610, the electronic device displays a first screen including a first object. The electronic device may configure the first object as an object to be tracked. The object to be tracked may be preset or may be designated in the electronic device.

In step 620, the electronic device detects a screen switching event. For example, the screen switching event may be a movement of the electronic device. The electronic device may switch from the first screen to a second screen in response to the screen switching event. For example, the electronic device may rotate the first screen within the entire screen according to the rotation of the electronic device.

In step 630, the electronic device determines whether the first object is included in the second screen. When the first object is not included in the second screen, the electronic device displays at least a part of the first object in the second screen in step 640. However, when the first object is included in the second screen, the electronic device displays the second screen in step 650.

For example, as illustrated in FIG. 7A, the electronic device may switch and display the display screen corresponding to a part of the entire screen according to the screen switching event.

In response to the electronic device detecting a rightward rotation, the electronic device sequentially switches the screen from the first screen 511 illustrated in FIG. 5A to the second screen 512 illustrated FIG. 5D. Accordingly, the electronic device may sequentially display a plurality of screens 701 to 706.

More specifically, the electronic device sequentially displays left eye images and right eye images corresponding to the plurality of screens 701 to 706.

The screen 701 and the screen 702 include a first object 711. This corresponds to the first object 501 being included in a part corresponding to a user's view angle.

According to the rotation of the user's view, the first object 501 may contact a boundary of a user's view 801, as illustrated in FIG. 8A. The electronic device may display a part 712 of the first object. Thereafter, the electronic device may display a screen 705 including only a second object 713 and may display a screen 706 including the second object 713 and a third object 714.

The electronic device may also display a plurality of screens 721 to 726 as illustrated in FIG. 7B. More specifically, the electronic device may sequentially display left eye images and right eye images corresponding to the plurality of screens 721 to 726.

As illustrated in FIG. 7B, the electronic device may also display the part 712 of the first object on the screen 724 corresponding to the view angle at which the first object 501 is not viewed on the entire screen. For example, the electronic device may maintain the displaying of the part 712 of the first object on the third screen. Thereafter, the electronic device may display a screen 725 including the second object 713 and may display a screen 726 including the second object 713 and the third object 714. The electronic device continues to display the part 712 of the first object on each of the screen 725 and the screen 726. That is, the electronic device displays as if the first object 501 is being dragged, even though the screen is switched.

Displaying only the part 712 of the first object is only an example, and the electronic device may display an entirety of the first object or display another object which may replace the first object.

Alternatively, the electronic device may change attributes of the first object, such as a color or transparency, and display the changed first object.

Further, displaying the first object at a location out of the user's view angle is only an example, and the electronic device may display the first object at a predetermined location of the screen.

Referring to FIGs. 8A and 8B, the electronic device may change a first view angle 801 to a second view angle 802 in response to the screen switching event. The first object 501 may contact a boundary of the first view angle 801. The electronic device may display, for example, the screen 723 of FIG. 7B, according to the first view angle 801.

The electronic device may change the location of the first object 501 according to the second view angle 802. For example, the electronic device may change the location of the first object 501 from (x1, y1, z1) to (x4, y4, z4).

The electronic device may change the location of the first object 501 according to the rotation of the electronic device. The electronic device may display the first object 501 at the location of (x4, y4, z4), the second object 502 at the location of (x2, y2, z2), and the third object 503 at the location of (x3, y3, z3) on one screen, like screen 726 of FIG. 7B.

When the rotation of the electronic device corresponds to (θ, ϕ), the electronic device may rotate the location of (x1, y1, z1) by (θ, ϕ) to determine the location as (x4, y4, z4).

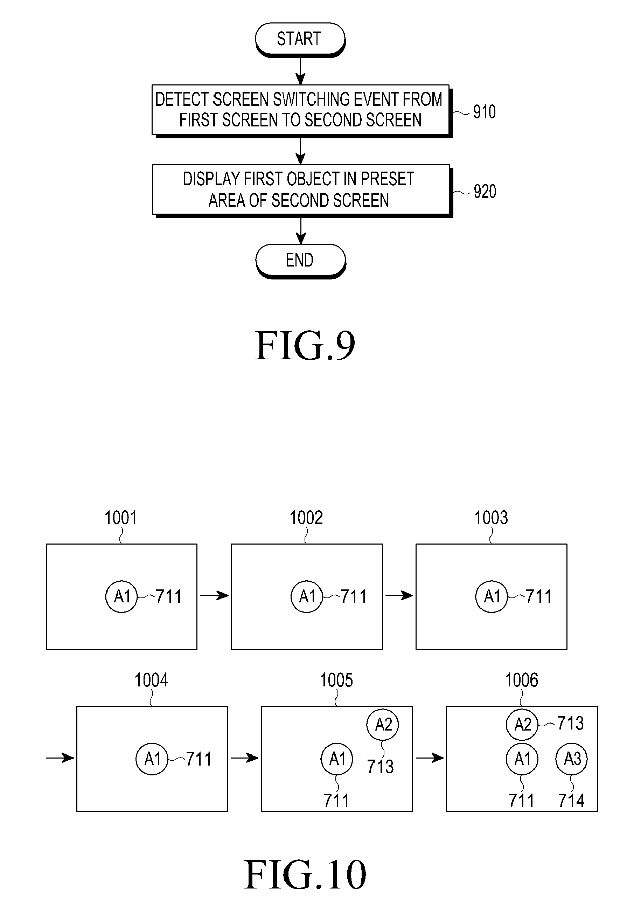

FIG. 9 is a flowchart illustrating a process of changing a location of an object to be tracked according to an embodiment of the present disclosure.

Referring to FIG. 9, in step 910, the electronic device detects a screen switching event for changing a user's view from a first screen to a second screen. For example, the electronic device may detect a movement of the electronic device.

In step 920, the electronic device displays a first object on a preset area of the second screen.

For example, the electronic device may display the first object 711 at the center of all screens 1001 to 1006 as illustrated in FIG. 10.

More specifically, the electronic device detects the screen switching event while the screen 1001 including the first object 711 is displayed. The electronic device always displays the first object 711 at a preset location, for example, a center or an edge, while displaying the remaining parts except for the first object 711 as illustrated in screens 1002 to 1006. That is, the electronic device displays the first object 711 as it is floating. Accordingly, the user may always view the object to be tracked.

The electronic device may overlappingly display the first object 711 and another object when the location of the first object 711 overlaps a location of the other object.

While the first object 711 overlaps the other object, the electronic device may move the location of the first object 711 to another location and display the moved first object 711.

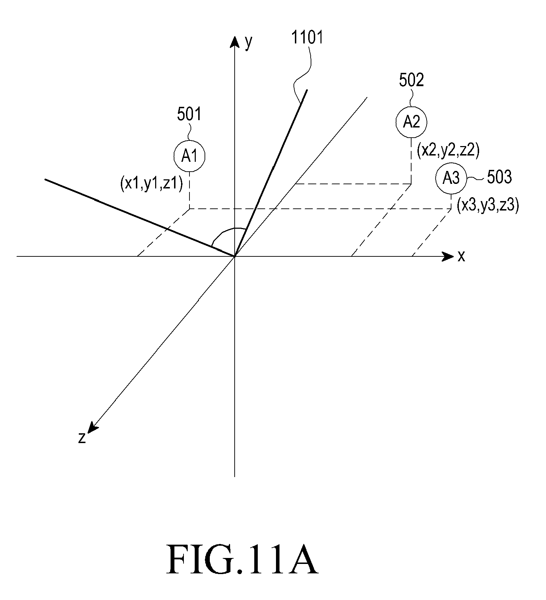

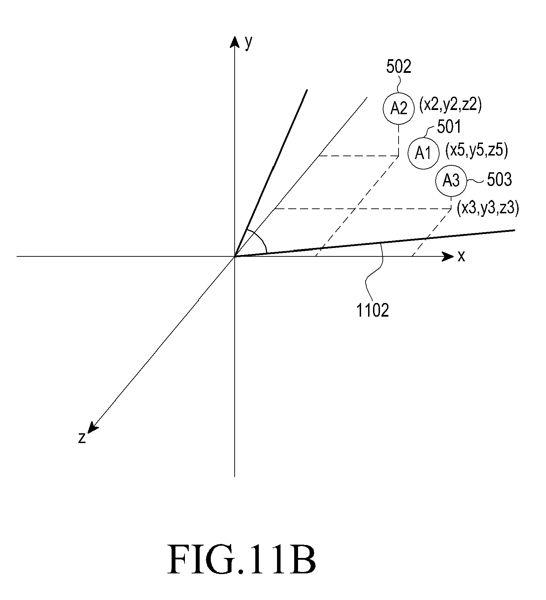

FIGs. 11A and 11B are conceptual diagrams illustrating movement of an object to be tracked on an entire screen according to an embodiment of the present disclosure.

Referring to FIG. 11A, the electronic device may display the screen 1001 of FIG. 10 on the entire screen according to a first user view 1101. The electronic device may detect a screen detection event, e.g., a rotation of the electronic device by (θ, ϕ).

The electronic device may rotate a location of the first object 501 according to the detected rotation as illustrated in FIG. 11B. When the rotation of the electronic device corresponds to (θ, ϕ), the electronic device may rotate the location of (x1, y1, z1) by (θ, ϕ) to determine the location (x5, y5, z5). That is, the electronic device may rotate the location of the first object as much as the electronic device rotates. Accordingly, the electronic device may display screen 1006 of FIG. 10 in accordance with a second user view 1102.

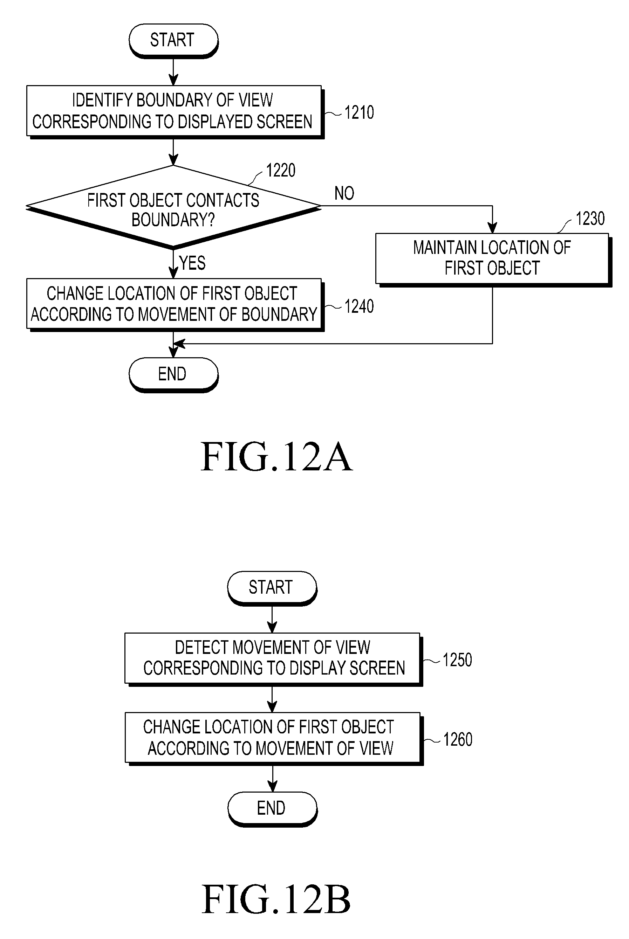

FIG. 12A is a flowchart illustrating a method of displaying a screen according to an embodiment of the present disclosure.

Referring to FIG. 12A, in step 1210, the electronic device identifies a boundary of the user's view corresponding to the displayed screen. The boundary of the user's view may be a boundary of the screen displayed on the electronic device. Alternatively, the boundary of the user's view may be configured in a predetermined part within the screen displayed on the electronic device.

In step 1220, the electronic device determines whether the first object, which is the object to be tracked, contacts the boundary. As described above, the electronic device may change the user's view according to the screen switching event, and also change the boundary of the user's view. The electronic device may determine whether the first object contacts the changed boundary. When the first object contacts the boundary, the first object may not be displayed thereafter, so that the electronic device may determine whether the first object contacts the boundary.

When the first object does not contact the boundary in step 1220, the electronic device maintains the location of the first object in step 1230.

When the first object contacts the boundary in step 1220, the electronic device changes the location of the first object according to the movement of the boundary in step 1240. The electronic device may detect the rotation of the electronic device and change the location of the first object based on the detected rotation. That is, even when the screen is switched, the electronic device may display the screen such that the first object contacts the boundary. Accordingly, the electronic device may continue to display the first object as if it is being dragged from a time point where the first object contacts the boundary, even though the screen is being switched.

FIG. 12B is a flowchart illustrating a method of displaying a screen according to an embodiment of the present disclosure.

Referring to FIG. 12B, in step 1250, the electronic device detects movement of the user's view corresponding to the displayed screen. The electronic device may detect the screen switching event and detect the movement of the user's view on the entire screen in response to the screen switching event. For example, the electronic device may detect the rotation of the electronic device and rotate the user's view according to the rotation of the electronic device.

In step 1260, the electronic device changes the location of the first object according to the movement of the user's view and display the changed first object. For example, the electronic device may change the location of the first object by rotating the first object according to the rotation of the user's view. Accordingly, the electronic device may display the first object as if it is being floated.

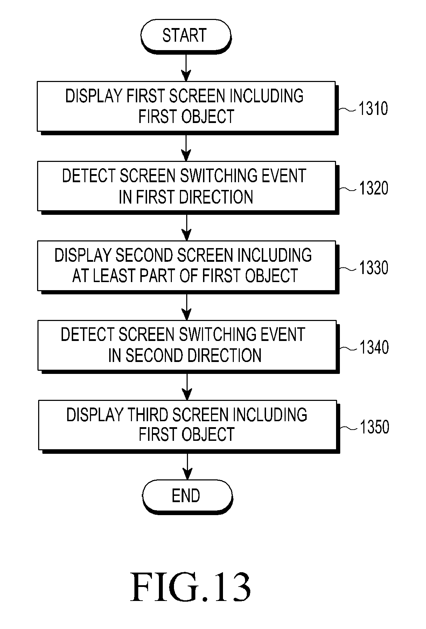

FIG. 13 is a flowchart illustrating a method of displaying a screen according to an embodiment of the present disclosure.

Referring to FIG. 13, in step 1310, the electronic device displays a first screen including a first object.

In step 1320, the electronic device detects a screen switching event in a first direction. For example, the electronic device may detect a screen switching event to a second screen arranged in the first direction from the first screen on the entire screen.

In step 1330, the electronic device displays the second screen including at least a part of the first object. According to the present embodiment, it is assumed that the second screen, which is the part of the entire screen, does not actually include the first object. Further, the first object may be an object to be tracked. Accordingly, the electronic device may display at least the part of the first object on the second screen. For example, the electronic device may change the location of the first object from (x1, y1, z1) to (x4, y4, z4) as illustrated in FIG. 8B.

In step 1340, the electronic device detects a screen switching event in a second direction. For example, the electronic device may detect a screen switching event from the second screen to a third screen arranged in the second direction from the second screen on the entire screen. The third screen may be a screen arranged between the first screen and the second screen on the entire screen. Alternatively, the third screen may be the first screen. The screen switching event in the second direction may be called a backward screen switching event.

In step 1350, the electronic device displays the third screen including the first object.

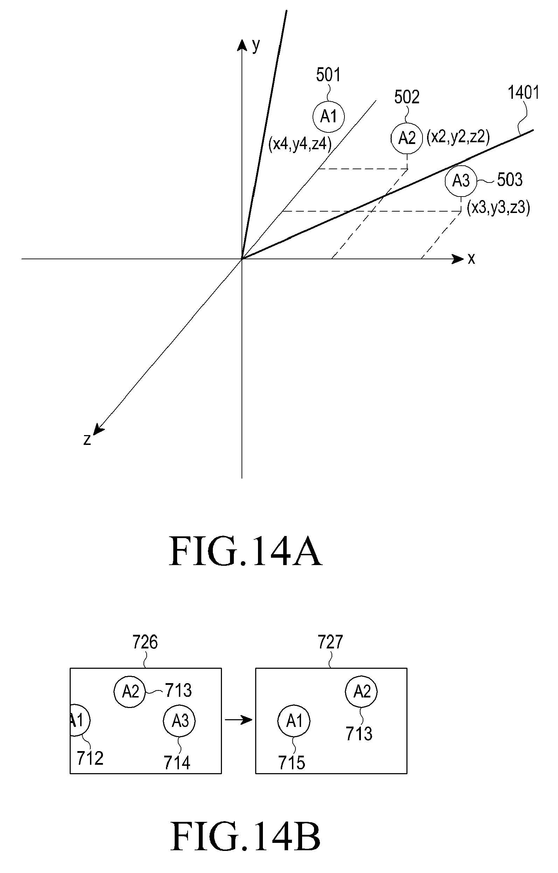

FIGs. 14A and 14B are conceptual diagrams illustrating an entire screen and a display screen according to an embodiment of the present disclosure.

Referring to FIG. 14A, the electronic device may rotate a user's view 1401 on the entire screen according to a backward screen switching event. For example, the electronic device may determine the user's view 1401 by rotating the user's view 802 of FIG. 8B. The user's view 1401 may include the first object 501 and the second object 502. The electronic device 101 may rotate the user's view 802 while maintaining (x4, y4, z4) as the location of the first object 501 on the entire screen according to the backward screen switching event. That is, even though the first object 501 contacts the boundary of the user's view, if the backward screen switching event is detected, the electronic device may maintain the location of the first object 501 on the entire screen.

The electronic device may switch the screen 726 corresponding to the user's view 802 to the screen 727 corresponding to the user's view 1401 as illustrated in FIG. 14B. The screen 727 corresponding to the user's view 1401 includes the first object 715. As described above, the user may easily view the object to be tracked without the turn his head again back to an initial location, in order to view the object to be tracked again.

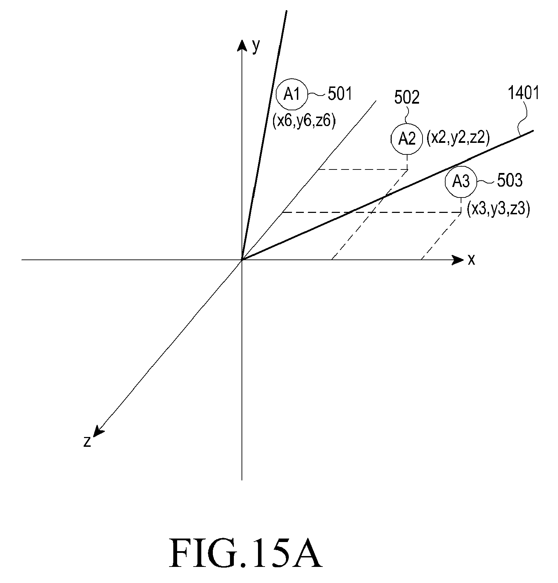

FIGs. 15A to 15C illustrate an entire screen and a display screen corresponding to a backward screen switching event according to an embodiment of the present disclosure.

Referring to FIG. 15A, the electronic device may rotate the user's view 1401 on the entire screen according to a backward screen switching event. For example, the electronic device may determine the user's view 1401 by rotating the user's view 802 of FIG. 8B. The user's view 1401 includes the first object 501 and the second object 502. The electronic device may rotate the location of the first object 501 from (x4, y4, z4) to (x6, y6, z6) according to the backward screen switching event. That is, when the first object 501 contacts the boundary of the user's view, the electronic device may change the location of the first object 501 according to the backward screen switching event. Accordingly, the electronic device may continually display the first object 501 as if it is backwardly dragged, even though the screen is switched.

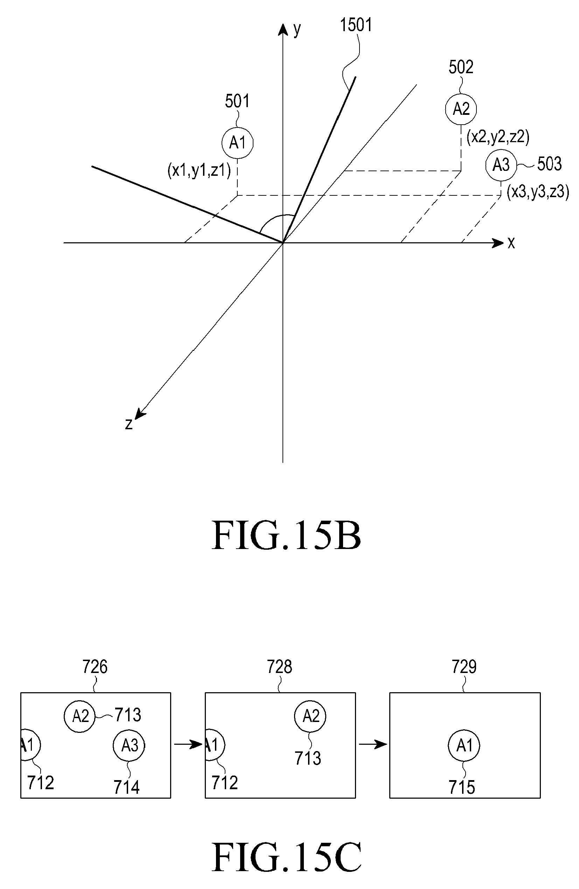

Referring to FIG. 15B, the electronic device may rotate a user's view 1501 until the user's view includes (x1, y1, z1), which is the initial location of the first object 501, according to the backward screen switching event. The electronic device may store the initial location of the first object 501. Further, when the first object 501 backwardly moves and reaches the initial location, the electronic device may display the initial location.

Accordingly, as illustrated in FIG. 15C, the electronic device may display the screen 726 including the part 712 of the first object, the second object 713, and the third object 714. The electronic device may display the screen 728 including the second object 713 according to the backward screen switching event, and in this case, may also display the part 712 of the first object. The electronic device may display the screen 729 including the first object 715.

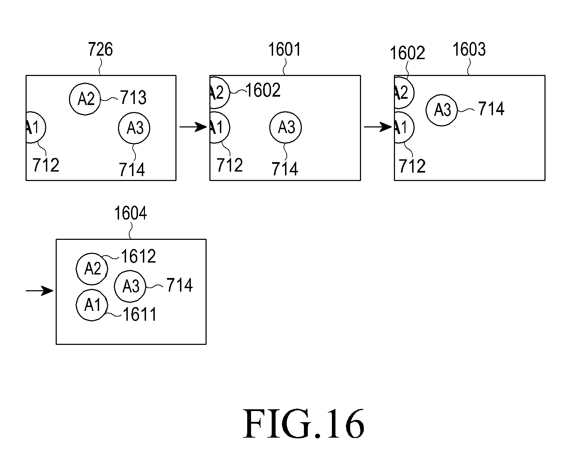

FIG. 16 is a conceptual diagram illustrating a screen according to an embodiment of the present disclosure.

In FIG. 16, it is assumed that the first object 712 and the second object 713 are configured as objects to be tracked. That is, FIG. 16 illustrates a method of displaying a screen for a plurality of objects to be tracked.

Referring to FIG. 16, the electronic device may display the screen 726 including the part 712 of the first object, the second object 713, and the third object 714. More specifically, the electronic device may display a left eye image and a right eye image corresponding to the screen 726. For example, the electronic device may display the screen 726 corresponding to the user's view 802 of FIG. 8B.

As illustrated in FIG. 8B, the electronic device 101 displays the screen including the first object 501 arranged at (x4, y4, z4), the second object 502 arranged at (x2, y2, z2), and the third object 503 arranged at (x3, y3, z3). The electronic device may move the location of the first object on the entire screen from (x1, y1, z1) to (x4, y4, z4) while rotating the user's view 801 of FIG. 8A. According to the change in the location on the entire screen, the object may be fixedly displayed at a predetermined location on the screen displayed on the electronic device.

The electronic device may detect a screen switching event for further rotating the user's view 802 in a right direction. The electronic device 101 may display screens 1601 and 1603 including a part 1602 of the second object from a time point, when the second object contacts the boundary of the user's view. When display areas of the part 712 of the first object and the part 1602 of the second object overlap each other, the electronic device 101 may overlappingly display the two objects.

Thereafter, the electronic device may detect a backward screen switching event. In response to the backward screen switching event, the electronic device may display the screen 1604 including the first object 1611, the second object 1612, and the third object 714. When the backward screen switching event is detected, the electronic device may display the screen 1604 while maintaining the locations of the first object 1611 and the second object 1612, which are the objects to be tracked on the entire screen.

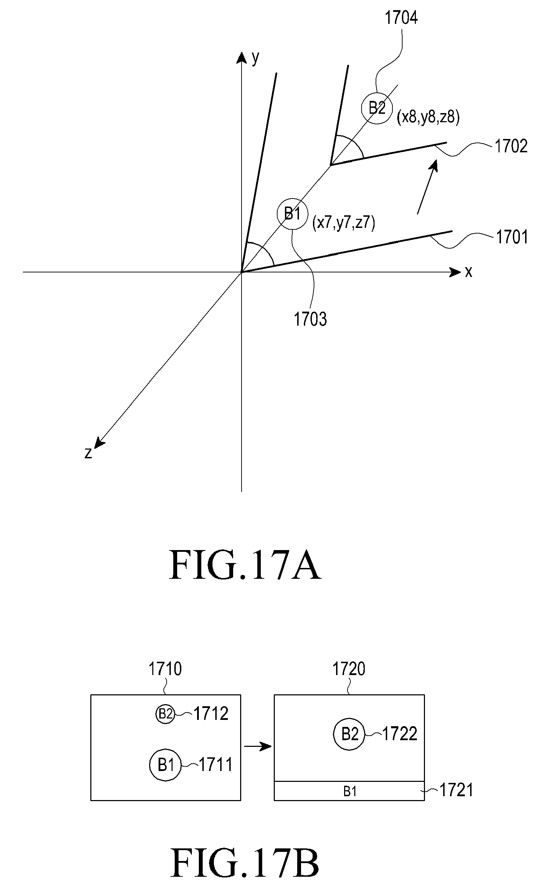

FIGs. 17A and 17B are conceptual diagrams illustrating a method of displaying an object to be tracked according to movement of a user's view in a z axis direction according to an embodiment of the present disclosure.

Referring to FIG. 17A, the entire screen include a first object 1703 and a second object 1704. The first object 1703 is arranged at (x7, y7, z7), and the second object 1704 is arranged at (x8, y8, z8). The screen switching event may be an event for moving the user's view from a first user's view 1701 to a second user's view 1702.

Referring to FIG. 17B, the electronic device may display a screen 1710 including a first object 1711 and a second object 1712 according to the first user view 1701. The electronic device may display the first object 1711 to be larger than the second object 1712 according to a distance from the user's view 1701 of the first object 1703 and the second object 1704 on the entire screen.

The electronic device may display a screen 1720 including a second object 1722 according to the changed second user view 1702. The second object 1722 within the screen 1720 may be displayed to be larger than the second object 1712 within the screen 1710. The electronic device may display a part 1721 of the first object, which is the object to be tracked. The electronic device may display the part 1721 of the first object from a time point when the first object 1703 contacts the boundary of the user's view. Further, the electronic device may display the first object 1703 while moving the location of the first object 1703 on the entire screen from the time point when the first object 1703 contacts the boundary of the user's view.

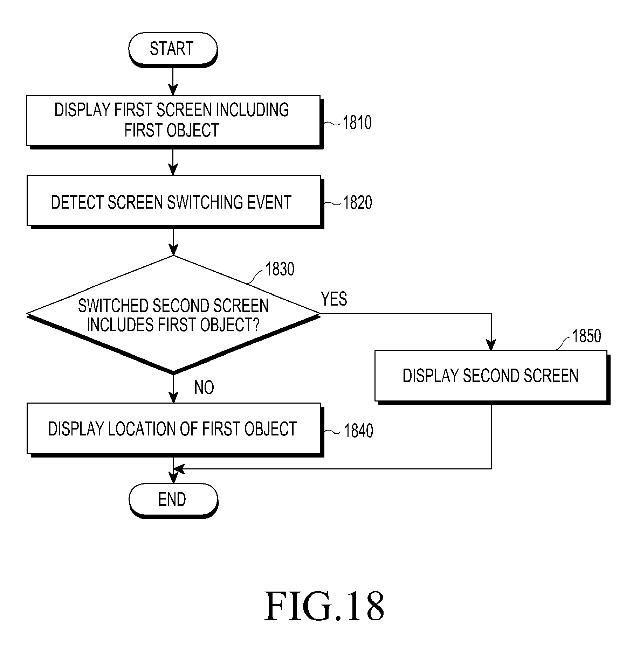

FIG. 18 is a flowchart illustrating a method of displaying a screen according to an embodiment of the present disclosure.

Referring to FIG. 18, in step 1810, the electronic device displays a first screen including a first object.

In step 1820, the electronic device detects a screen switching event for switching the screen from a first screen to a second screen.

In step 1830, the electronic device determines whether the first object is included in the second screen.

When the first object is not included in the second screen, the electronic device additionally displays the location of the first object on the second screen in step 1840.

When the first object is included in the second screen, the electronic device displays the second screen in step 1850.

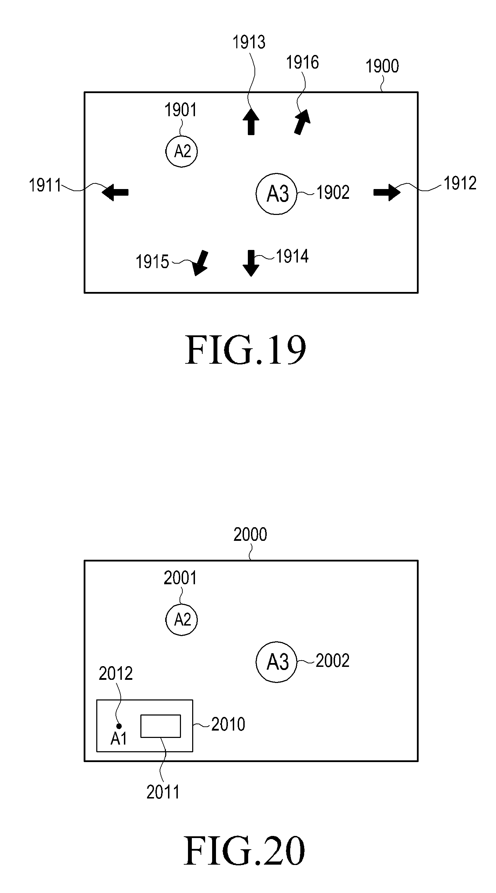

FIGs. 19 and 20 are conceptual diagrams illustrating a method of displaying a location of an object to be tracked according to an embodiment of the present disclosure.

Referring to FIG. 19, the electronic device may display a second screen 1900 including a second object 1901 and a third object 1902. An object to be tracked may not be included within the second screen 1900. The electronic device may display, by arrows 1911 to 1916, a relative location of the object to be tracked based on the second screen 1900 of the entire screen. When one of the arrows 1911 to 1916 is designated, the electronic device may display a screen including the object to be tracked.

Referring to FIG. 20, the electronic device may display a second screen 2000 including a second object 2001 and a third object 2002. An object to be tracked may not be included within the second screen 2000. The electronic device may display a corresponding mini map 2010 on the entire screen. The second screen 2011 and a location of the object 2012 to be tracked may be displayed on the mini map 2010. When one location is designated on the mini map 2010, the electronic device may display a screen including the designated location. Particularly, when the object 2012 to be tracked is designated on the mini map 2010, the electronic device may display a screen including the object to be tracked.

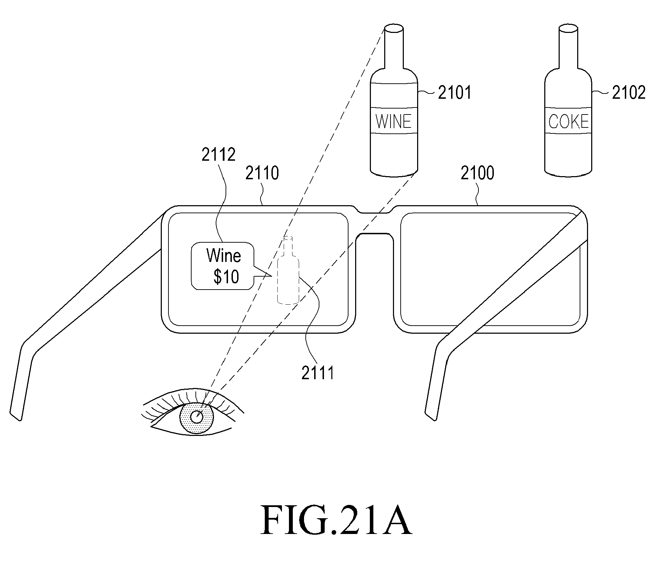

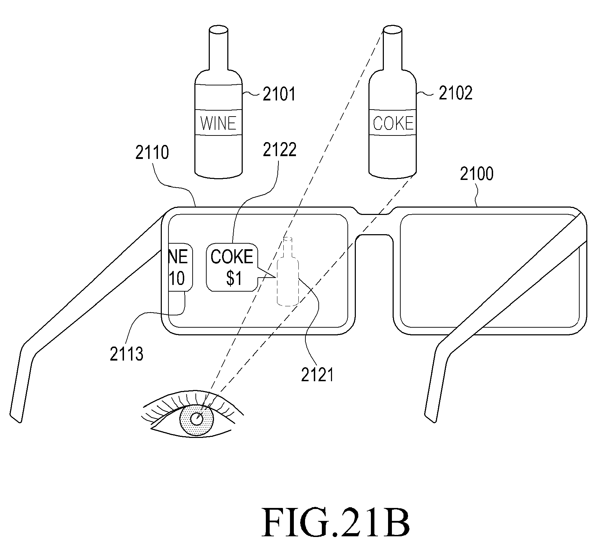

FIGs. 21A and 21B are conceptual diagrams illustrating an electronic device according to an embodiment of the present disclosure.

Referring to FIG. 21A, an electronic device 2100, i.e., a glasses type wearable electronic device, includes a transparent display 2110. The transparent display 2110 allows light from the outside to pass through, and the user may view an object 2101 outside the electronic device 2100. The user may view the external object 2101 in an area 2111 of the transparent display 2110. The electronic device 101 may photograph the external object 2101 and display an additional information object 2112 on the transparent display 2110 by analyzing the photographed image. Accordingly, the electronic device 2100 may provide an augmented reality service for the external object.

Referring to FIG. 21B, the user may turn his head to view an external object 2102. The external object 2101 may be out of the user's view in FIG. 21B, while the user views the external object 2102 in an area 2121 of the transparent display 2110. The electronic device 2100 may photograph the external object 2102 and display an additional information object 2122 on the transparent display 2110 by analyzing the photographed image. Additionally, the electronic device 2100 may display at least a part 2113 of the additional information object corresponding to the external object 2101 on the transparent display 2100.

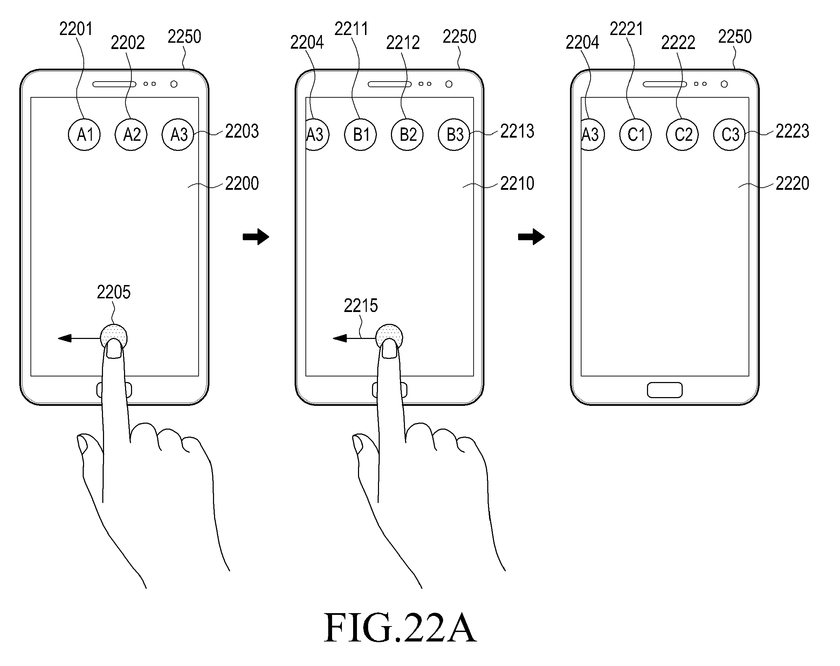

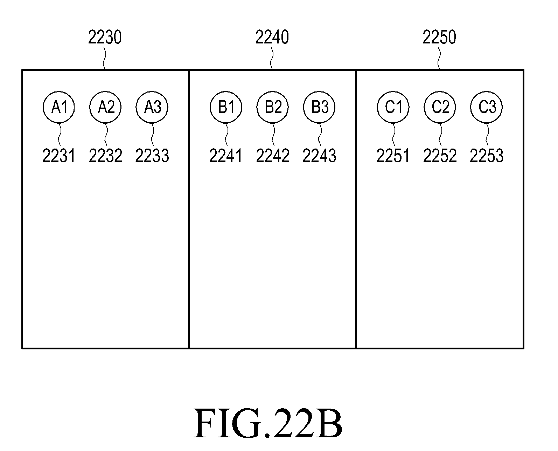

FIGs. 22A and 22B are conceptual diagrams illustrating a method of displaying a screen by an electronic device according to an embodiment of the present disclosure.

Referring to FIG. 22A, the electronic device 2250 may display a first menu screen 2200 including a first object 2201, a second object 2202, and a third object 2203. In FIG. 22A, it is assumed that the third object 2203 is an object to be tracked.

FIG. 22B illustrates an entire screen configured in a two dimensional plane. The entire screen includes a first page 2230, a second page 2240, and a third page 2250. The first page 2230 includes a first object 2231, a second object 2232, and a third object 2233. The second page 2240 includes a fourth object 2241, a fifth object 2242, and a sixth object 2243. The third page 2250 includes a seventh object 2251, an eighth object 2252, and a ninth object 2253. For example, the first object 2231 to the ninth object 2253 may be icons for executing applications.

As illustrated in FIG. 22A, the user may input a leftward flick gesture 2205. The flick gesture 2205 may be a screen switching event, and the electronic device 2250 may switch the first menu screen 2200 to the second menu screen 2210 in response to the screen switching event. The second menu screen 2210 may correspond to the second page 2240 of the entire screen. The second menu screen 2210 includes a fourth object 2211, a fifth object 2212, and a sixth object 2213. Further, the electronic device 2250 may display the third object 2204, which is the object to be tracked, on the second menu screen 2210.

Thereafter, as illustrated in FIG. 22A, the user may input another leftward flick gesture 2215. The flick gesture 2215 may be a screen switching event, and the electronic device 2250 may switch the second menu screen 2210 to the third menu screen 2220 in response to the screen switching event. The third menu screen 2220 corresponds to the third page 2250 of the entire screen. The third menu screen 2220 includes a seventh object 2221, an eighth object 2222, and a ninth object 2223. Additionally, the electronic device 2250 continues to display the third object 2204, which is the object to be tracked, on the third menu screen 2220.

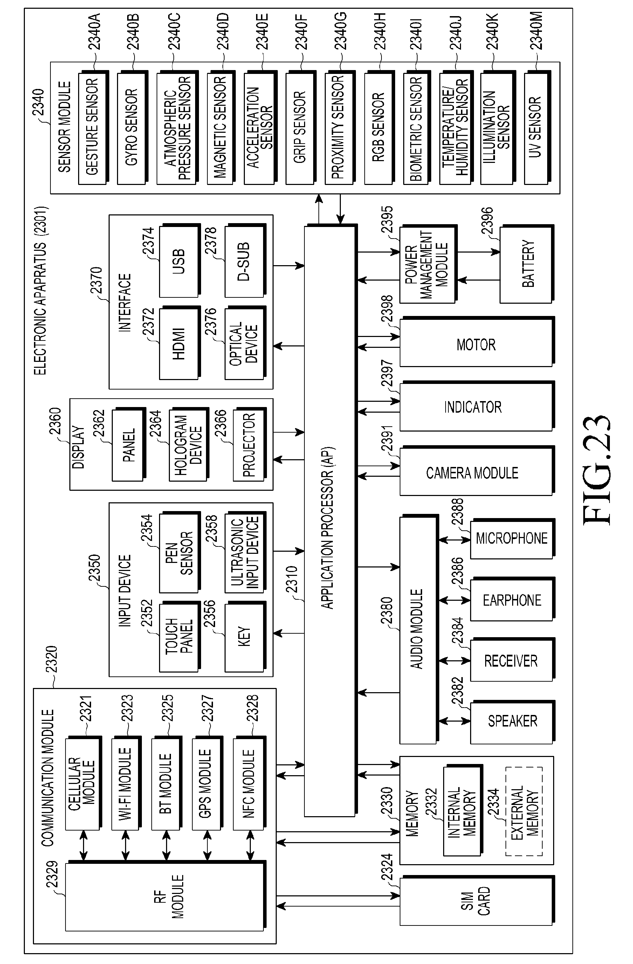

FIG. 23 is a block diagram illustrating an electronic device according to an embodiment of the present disclosure.

Referring to FIG. 23, an electronic device 2301 includes an AP 2310, a communication module 2320, a Subscriber Identification Module (SIM) card 2324, a memory 2330, a sensor module 2340, an input device 2350, a display 2360, an interface 2370, an audio module 2380, a camera module 2391, a power management module 2395, a battery 2396, an indicator 2397, and a motor 2398.

The AP 2310 may control a plurality of hardware or software components connected the AP 2310 by driving an operating system or an application program and perform a variety of data processing and calculations. The AP 2310 may be implemented by, for example, a System on Chip (SoC). The AP 2310 may further include a Graphics Processing Unit (GPU) and/or an image signal processor. Alternatively, the AP 2310 may also include at least some of the components illustrated in FIG. 23, e.g., a cellular module 2321. The AP 2310 may load instructions or data, received from at least one other component (for example, a non-volatile memory), in a volatile memory to process the loaded instructions or data, and may store various types of data in a non-volatile memory.

The communication module 2320 may have a configuration equal or similar to the communication module 170 illustrated in FIG. 1.

The communication module 2320 includes a cellular module 2321, a Wi-Fi module 2323, a Bluetooth (BT) module 2325, a GPS module 2327, an NFC module 2328, and a Radio Frequency (RF) module 2329.

The cellular module 2321 may provide a voice call, video call, text message services, or Internet services through, for example, a communication network. The cellular module 2321 may distinguish between and authenticate electronic devices within a communication network using a subscriber identification module (for example, the SIM card 2324). The cellular module 2321 may perform at least some of the functions which may be provided by the AP 2310. The cellular module 2321 may include a CP.

The Wi-Fi module 2323, the BT module 2325, the GPS module 2327, and the NFC module 2328 may include a processor for processing data transmitted/received through the corresponding module. At least some (two or more) of the cellular module 2321, the Wi-Fi module 2323, the BT module 2325, the GPS module 2327, and the NFC module 2328 may be included in one Integrated Chip (IC) or IC package.

The RF module 2329 may transmit/receive RF signals, for example, communication signals. The RF module 2329 may include a transceiver, a Power Amp Module (PAM), a frequency filter, a Low Noise Amplifier (LNA) and/or an antenna. At least one of the cellular module 2321, the Wi-Fi module 2323, the BT module 2325, the GPS module 2327, and the NFC module 2328 may transmit/receive an RF signal through a separate RF module.

The SIM card 2324 may include a subscriber identification module and/or an embedded SIM, and contain unique identification information (for example, an Integrated Circuit Card Identifier (ICCID)) or subscriber information (for example, an International Mobile Subscriber Identity (IMSI)).

The memory 2330 includes an internal memory 2332 or an external memory 2334. The internal memory 2332 may include at least one of a volatile memory (e.g., a Dynamic Random Access Memory (DRAM), a Static RAM (SRAM), a Synchronous Dynamic RAM (SDRAM), etc.) and a non-volatile memory (e.g., a One Time Programmable Read Only Memory (OTPROM), a Programmable ROM (PROM), an Erasable and Programmable ROM (EPROM), an Electrically Erasable and Programmable ROM (EEPROM), a flash memory (for example, a NAND flash memory or a NOR flash memory), a hard drive, or a Solid State Drive (SSD).

The external memory 2334 may further include a flash drive, a Compact Flash (CF), a Secure Digital (SD), a Micro Secure Digital (Micro-SD), a Mini Secure Digital (Mini-SD), an extreme Digital (xD), a memory stick, etc. The external memory 2334 may be functionally and/or physically connected to the electronic device 2301 through various interfaces.

The sensor module 2340 may measure a physical quantity or detect an operation state of the electronic device 2301, and may convert the measured or detected information to an electrical signal. The sensor module 2340 includes a gesture sensor 2340A, a gyro sensor 2340B, an atmospheric pressure sensor 2340C, a magnetic sensor 2340D, an acceleration sensor 2340E, a grip sensor 2340F, a proximity sensor 2340G, a color sensor 2340H (e.g., an RGB sensor), a biometric sensor 2340I, a temperature/humidity sensor 2340J, an illumination sensor 2340K, and an Ultra Violet (UV) sensor 2340M. Additionally or alternatively, the sensor module 2340 may include an E-nose sensor, an electromyography (EMG) sensor, an electroencephalogram (EEG) sensor, an electrocardiogram (ECG) sensor, an infrared (IR) sensor, an iris sensor, and/or a fingerprint sensor.

The sensor module 2340 may further include a control circuit for controlling at least one sensor included therein.

The electronic device 2301 may further include a processor configured to control the sensor module 2340 as a part of or separately from the AP 2310, and may control the sensor module 2340 while the AP 2310 is in a sleep state.

The input device 2350 includes a touch panel 2352, a (digital) pen sensor 2354, a key 2356, and an ultrasonic input device 2358. The touch panel 2352 may use at least one of a capacitive type, a resistive type, an infrared type, and an ultrasonic type. The touch panel 2352 may further include a control circuit. The touch panel 2352 may further include a tactile layer, and provide a tactile reaction to a user.

The (digital) pen sensor 2354 may include a recognition sheet which is a part of the touch panel or a separate recognition sheet. The key 2356 may include a physical button, an optical key, and/or a keypad.

The ultrasonic input unit 2358 may input data through an input device that generates an ultrasonic signal, and the electronic device 2301 may identify data by detecting a sound wave with a microphone 2388).

The display 2360 includes a panel 2362, a hologram device 2364, and a projector 2366. The panel 2362 may be flexible, transparent, or wearable. The panel 2362 may also be configured to be integrated with the touch panel 2352 as a single module.

The hologram device 2364 may show a stereoscopic image in the air by using interference of light.

The projector 2366 may project light onto a screen to display an image. For example, the screen may be located inside or outside the electronic device 2301.

The display 2360 may further include a control circuit for controlling the panel 2362, the hologram device 2364, or the projector 2366.

The interface 2370 includes an HDMI 2372, a USB 2374, an optical interface 2376, and a D-subminiature (D-sub) 2378. Additionally or alternatively, the interface 2370 may include a Mobile High-definition Link (MHL) interface, a Secure Digital (SD) card/Multi-Media Card (MMC) interface, or an Infrared Data Association (IrDA) standard interface.

The audio module 2380 may bilaterally convert a sound and an electrical signal. The audio module 2380 may process sound information input or output through, e.g., a speaker 2382, a receiver 2384, earphones 2386, and the microphone 2388.

The camera module 2391 is a device that may photograph a still image and a dynamic image. The camera module 291 may include one or more image sensors (e.g., a front sensor or a back sensor), a lens, an Image Signal Processor (ISP) or a flash (for example, LED or xenon lamp).

The power management module 2395 may manage power of the electronic device 2301. The power management module 2395 may include a Power Management Integrated Circuit (PMIC), a charger IC, or a battery gauge. The PMIC may have a wired and/or wireless charging scheme. Examples of the wireless charging method may include a magnetic resonance method, a magnetic induction method, an electromagnetic method, etc. Additional circuits (e.g., a coil loop, a resonance circuit, a rectifier, etc.) for wireless charging may be further included. The battery gauge may measure the remaining amount of battery 2396, a charging voltage and current, or temperature. The battery 2396 may include a rechargeable battery and/or a solar battery.

The indicator 2397 may indicate particular status of the electronic device 2301 or a part thereof (e.g., the AP 2310), such as a booting status, a message status, a charging status, etc.

The motor 2398 may convert an electrical signal into mechanical vibrations, and may generate a vibration or haptic effect. Although not illustrated, the electronic device 2301 may include a processing device (for example, a GPU) for supporting mobile TV. The processing device for supporting mobile TV may process media data according to a standard of Digital Multimedia Broadcasting (DMB), Digital Video Broadcasting (DVB), media flow, etc.

Each of the elements of the electronic device according to the present disclosure may be implemented by one or more elements and the name of the corresponding element may vary depending on a type of the electronic device. In various embodiments, the electronic device may include at least one of the above-described elements. Some of the above-described elements may be omitted from the electronic device, or the electronic device may further include additional elements. Further, some of the elements of the electronic device according to the various embodiments of the present disclosure may be combined to form a single entity, and thus, may equivalently execute functions of the corresponding elements prior to the combination.

The term "module" as used herein may, for example, mean a unit including one of hardware, software, and firmware or a combination of two or more of them. The "module" may be interchangeably used with, for example, the term "unit", "logic", "logical block", "component", or "circuit". The "module" may be the smallest unit of an integrated component or a part thereof. The "module" may be the smallest unit that performs one or more functions or a part thereof. The "module" may be mechanically or electronically implemented. For example, the "module" according to the present disclosure may include at least one of an Application-Specific Integrated Circuit (ASIC) chip, a Field-Programmable Gate Arrays (FPGA), and a programmable-logic device for performing operations which has been known or are to be developed hereinafter.

According to various embodiments, at least some of the devices (for example, modules or functions thereof) or the method (for example, operations) according to the present disclosure may be implemented by a command stored in a computer-readable storage medium in a programming module form. When the command is executed by one or more processors (for example, the processor 120), the one or more processors may execute a function corresponding to the command. The computer-readable storage medium may be, for example, the memory 130.

The computer readable recoding medium may include a hard disk, a floppy disk, magnetic media (e.g., a magnetic tape), optical media (e.g., a Compact Disc ROM (CD-ROM) and a DVD), magneto-optical media (e.g., a floptical disk), a hardware device (e.g., a ROM, a Random Access Memory (RAM), a flash memory), etc.

In addition, the program instructions may include high class language codes, which can be executed in a computer by using an interpreter, as well as machine codes made by a compiler. The aforementioned hardware device may be configured to operate as one or more software modules in order to perform the operation of the present invention, and vice versa.

The programming module according to the present disclosure may include one or more of the aforementioned elements or may further include other additional elements, or some of the aforementioned elements may be omitted. Operations executed by a module, a programming module, or other element elements according to various embodiments of the present disclosure may be executed sequentially, in parallel, repeatedly, or in a heuristic manner. Further, some operations may be executed according to another order or may be omitted, or other operations may be added.

According to various embodiments of the present disclosure, a storage medium having commands stored therein is provided. The commands are configured to allow one or more processors to perform one or more operations when being executed by the one or more processors. The one or more operations may include: displaying a first screen including a first object; detecting a screen switching event to switch the screen of the electronic device from the first screen to a second screen; and when the second screen does not include the first object, displaying at least a part of the first object on the second screen.

While the present disclosure has been particularly shown and described with reference to certain embodiments thereof, it will be understood by those of ordinary skill in the art that various changes in form and details may be made therein without departing from the spirit and scope of the present disclosure as defined by the following claims and their equivalents.

## Claims

1. A method of displaying a screen by an electronic device, the method comprising:
displaying a first screen including a first object;
detecting a screen switching event to switch from the displayed first screen to a second screen; and
when the second screen does not include the first object, displaying at least a part of the first object on the second screen.

2. The method of claim 1, wherein the screen switching event corresponds to movement of the electronic device.

3. The method of claim 2, wherein the first screen corresponds to a first part of a preset entire screen and the second screen corresponds to a second part of the preset entire screen, and
wherein displaying at least the part of the first object on the second screen comprises displaying the second screen based on at least one of a degree of the movement and a direction of the movement.

4. The method of claim 1, wherein displaying at least the part of the first object on the second screen comprises displaying the at least the part of the first object to contact a boundary of the second screen.

5. The method of claim 4, wherein the at least the part of the first object contacts the boundary of the second screen from a time point when the first object contacts the boundary of the second screen during a screen switching corresponding to the screen switching event.

6. The method of claim 4, further comprising:
detecting a backward screen switching event for a screen switching in a direction opposite to a direction of a screen switching corresponding to the screen switching event; and
displaying the first object in accordance with the backward screen switching event.

7. The method of claim 4, wherein displaying at least the part of the first object on the second screen comprises changing a location of the first object on a preset entire screen according to the screen switching event, and displaying the first object on the changed location.

8. The method of claim 1, wherein displaying at least the part of the first object on the second screen comprises displaying the first object on a preset location of the second screen.

9. The method of claim 1, wherein the first screen includes a left eye image and a right eye image for providing a virtual reality service.

10. An electronic device comprising:
a display configured to display a first screen including a first object; and
a processor configured to detect a screen switching event to switch the display from displaying the first screen to a second screen, and when the second screen does not include the first object, to control the display to display at least a part of the first object on the second screen.

11. The electronic device of claim 10, further comprising a sensing module configured to sense movement of the electronic device,
wherein the processor is configured to detect the screen switching event based on the sensed movement of the electronic device.

12. The electronic device of claim 11, wherein the first screen corresponds to a first part of a preset entire screen and the second screen corresponds to a second part of the preset entire screen, and
wherein the processor is configured to control the display to display the second screen based on at least one of a degree of the movement and a direction of the movement.

13. The electronic device of claim 10, wherein the processor is configured to control the display to display at least the part of the first object contacting a boundary of the second screen.

14. The electronic device of claim 13, wherein the at least the part of the first object contacts the boundary of the second screen from a time point when the first object contacts the boundary of the second screen during a screen switching corresponding to the screen switching event.

15. The electronic device of claim 13, wherein the processor is configured to detect a backward screen switching event for a screen switching in a direction opposite to a direction of a screen switching corresponding to the screen switching event, and is configured to control the display to display the first object in accordance with the backward screen switching event.
